# EUROPÄISCHE PATENTSCHRIFT

(11) **EP 1 913 287 B1**
(45) Veröffentlichungstag und Bekanntmachung des Hinweises auf die Patenterteilung: **18.03.2009**
(21) Anmeldenummer: 06762911.3
(22) Anmeldetag: 31.07.2006
(51) Int. Cl.: F16H 29/14

(54) **STUFENLOSES GETRIEBE SOWIE BETRIEBSVERFAHREN DAFÜR**
CONTINUOUSLY VARIABLE TRANSMISSION AND OPERATING METHOD THEREFOR
TRANSMISSION A REGLAGE CONTINU ET PROCEDE D'EXPLOITATION CORRESPONDANT

(30) Priorität: 29.07.2005 DE 102005036379; 03.03.2006 DE 102006010453
(43) Veröffentlichungstag der Anmeldung: 23.04.2008
(73) Patentinhaber: UMS Maschinenbau GmbH, 86633 Neuburg an der Donau (DE)
(72) Erfinder: KOBLER, Peter, 93059 Regensburg (DE)
(74) Vertreter: Küchler, Stefan
(86) Internationale Anmeldenummer: PCT/EP2006/007575
(87) Internationale Veröffentlichungsnummer: WO 2007/012503

(56) Entgegenhaltungen:
- WO-A-20/04013518
- DE-A1- 3 605 211
- DE-A1- 10 032 479
- DE-A1- 19 510 772
- DE-A1- 19 650 222
- JP-A- 7 012 197
- US-A- 3 087 355

## Beschreibung

Die Erfindung richtet sich auf ein stufenloses Getriebe und auf ein Verfahren zur Übertragung von relativen Drehbewegungen zwischen wenigstens einem ersten Drehteil, insbesondere einer Antriebswelle, einen Antriebsring oder -zylinder, und einem Chassis oder Gehäuse auf wenigstens ein zweites Drehteil, insbesondere eine Abtriebswelle, einen Abtriebsring oder -zylinder.

Übersetzungen von Drehzahl und Drehmoment werden üblicherweise als Getriebe bezeichnet. Diese ermöglichen die Übersetzung eines von einem Antrieb gelieferten Drehmomentes und einer Drehzahl in ein unterschiedliches Drehmoment bzw. eine unterschiedliche Drehzahl oder Drehzahl/Drehmoment-Kombination.

Ein derartiges Getriebe kann als Stufengetriebe oder als stufenloses Getriebe ausgebildet sein, wobei das Stufengetriebe zumindest ein vorgegebenes Übersetzungsverhältnis aufweist, jedoch das Übersetzungsverhältnis eines stufenlosen Getriebes in einem vorgegebenen Bereich kontinuierlich variierbar ist.

Stufengetriebe werden als Zahnradgetriebe realisiert, die vorgegebene Übersetzungsverhältnisse dadurch erreichen, dass im Getriebe Zahnräder mit jeweils unterschiedlichen Radien miteinander in einem Wirkverbund stehen. Derartige Stufengetriebe weisen zwar einen hohen Wirkungsgrad (>90%) und einen einfachen technischen Aufbau sowie eine hohe Leistungsdichte auf, sind jedoch aufgrund Ihrer Zahnräder nachteilig unter Antriebslast (Drehmoment) nicht schaltbar, d.h. die gewählte Übersetzung ist unter Last nicht variierbar. Zur Variation des Übersetzungsverhältnisses ist eine Schubkraftunterbrechung des Antriebes erforderlich, die mittels einer Kupplungsvorrichtung vorgenommen wird.

Stufenlose Getriebe dagegen sind als Reibrad bzw. Umschlingungsgetriebe ausgebildet und bieten gegenüber Stufengetrieben den Vorteil einer Variation des Übersetzungsverhältnisses ohne Schubkraftunterbrechung. Bedingt durch den Aufbau eines derartigen stufenlosen Getriebes wird das Drehmoment vom Antrieb an den Abtrieb mittels relativ kleinflächiger Übertragungsmittel übertragen. Die im Kraftfluss befindlichen Übertragungsmittel, beispielsweise Reibräder oder Schubgliederbänder, neigen daher an den Kontaktflächen zum Durchdrehen, d.h. ein Schlupf entsteht. Somit kann mittels eines herkömmlichen stufenlosen Getriebes nur ein begrenztes Drehmoment übertragen werden, d.h. der Wirkungsgrad liegt beispielsweise unter 50%. Darüber hinaus nimmt der Verschleiß der Kraftübertragungskomponenten zu, was einen erhöhten Wartungsaufwand nach sich zieht.

Aus der DE 102 34 463 A1 ist ein stufenloses Getriebe mit einer Antriebswelle bekannt, bei dem das Getriebe eine mit mindestens zwei Langlöchern versehene Langlochscheibe aufweist, die mit der Antriebswelle direkt oder indirekt gekoppelt ist. Ferner sind mindestens zwei in den Langlöchern der Langlochscheibe gelagerte und geführte Hebel vorgesehen und mindestens zwei an den Hebeln exzentrisch befestigte Ovalscheiben angeordnet. Mindestens eine Welle, auf der die Ovalscheiben geführt sind und die mindestens einen Freilauf aufweisen, sind ebenso wie ein Freilaufgehäuse vorgesehen, in das der mindestens eine Freilauf eingreift und das mit der Antriebswelle direkt oder indirekt gekoppelt ist. Zwar ermöglicht dieses Getriebe eine stufenlose Veränderung der Ausgangsdrehzahl. Ein Nachteil besteht darin, dass bei dieser Ausführungsform die exzentrischen Enden der Bolzen an einer damit zusammenwirkenden Schlitzscheibe nicht gelagert, sondern in axialer Richtung verschiebbar geführt sind. Eine Führung verdrehbarer Bolzen, welche die Abstände zwischen einer exzentrischen Verankerung und der demgegenüber versetzbaren Achse der Ausgangswelle nicht vollständig definiert, sondern von anderen Getriebeelementen abhängig macht, kann nur eine sehr kleine Kontakt-bzw. Übertragungsfläche aufweisen, die nur geringe Drehmomente zuläßt; dieser Nachteil ist also mit der Tatsache verknüpft, dass die einzelnen Bolzen stets den selben Abstand von der exzentrisch versetzbaren Ausgangswelle haben.

An einem ähnlichen Problem leidet die Vorrichtung gemäß der DE 36 05 211 A1, das den nächstliegenden Stand der Technik repräsentiert. Es zeigt ein Getriebe zum stufenlosen Verändern einer Drehzahl unter voller Last, bei dem ein innenverzahnter Zahnkranz mit der Abtriebswelle starr verbunden ist. In diesem Zahnkranz sind auf der gleichen Welle Flügel gelagert, die an ihren äußeren Enden je einen Schnäpper aufweisen, also einen nach außen ragenden, drehbeweglichen Fortsatz mit einer mehr oder weniger scharfen Kante am äußeren Ende zum Eingriff in den innenverzahnten Zahnkranz. An den freien Enden der Flügel ist ferner je ein Hebel angelenkt, dessen anderes Ende exzentrisch an einer mit der Antriebswelle starr verbundenen Scheibe gelagert ist. In einer neutralen Position fluchtet die Antriebswelle mit der Abtriebswelle; die Schnäpper greifen in die sägezahnförmige Innenverzahnung ein und treiben diese gemeinsam an; An- und Antriebswelle rotieren mit synchroner Drehzahl. Wird die Antriebswelle gegenüber der Abtriebswelle exzentrisch versetzt, so werden bei einer Drehung die Flügel in ungleiche Umlaufgeschwindigkeiten gebraucht, wobei der jeweils am schnellsten voranbewegte Schnäpper in Eingriff bleibt und die Abtriebswelle antriebt, während die anderen entlang der Innenverzahnung zurückbleiben. Je nach Verschieben der Antriebswelle vom Mittelpunkt kann so die Drehzahl verändert werden. Dabei bildet je ein Flügel zusammen mit dem zugeordneten Lenker ein Kniegelenk, dessen Beugung bei einem Umlauf der gegeneinander versetzten An- und Abtriebswelle periodisch verstärkt und wieder reduziert (gestreckt) wird. Die Drehbewegung wird jeweils an demjenigen Kniegelenk abgegriffen, welches aufgrund der Überlagerung von Drehbewegung und Beuge- bzw. Streckbewegung jeweils die größte Winkelgeschwindigkeit aufweist. Da an diesen Kniegelenken aus diesem Grund neben der Gelenkverbindung auch Schnäpper mit hoher Präzision gelagert werden müssen, sind die Hebel und Flügel mit einer hohen Stabilität auszuführen. Da somit die Kniegelenke nicht frei von äußeren Kräften sind, sondern zu einem integralen Bestandteil der Energieübertragung werden, ist die Mechanik nicht nur sehr kompliziert, sondern auch störanfällig. Denn bereits geringste Verformungen der Flügel oder Lenker können dazu führen, dass die Schnäpper nicht präzise arbeiten. Schließlich ist der Stellbereich beider vorgenannter Getriebe relativ gering, da die maximale, zusätzlich zu der synchronen Drehzahl an der Abtriebswelle erzielbare Drehzahl nur einem kleinen Bruchteil der Antriebsdrehzahl entspricht.

Daraus resultiert das die Erfindung initiierende Problem, ein stufenloses Getriebe derart weiterzubilden, dass unter Last eine stufenlose Änderung des Übersetzungsverhältnisses in weiten Grenzen möglich ist. Dabei soll nach Möglichkeit der mechanische Aufwand minimiert werden, um die Herstellungskosten in wirtschaftlich verwertbaren Grenzen zu halten, und gleichzeitig soll die Funktionszuverlässigkeit maximiert werden, um die Störanfälligkeit zu reduzieren.

Die Lösung dieses Problems gelingt mit einem stufenlosen Getriebe gemäß dem unabhängigen Anspruch 1 und einem Verfahren nach Anspruch 13.

Die Erfindung geht hierbei von einer Konstruktion aus, bei der zumindest ein erstes und zweites Koppelmodul eine Koppelmechanik bilden, wobei das erste Koppelmodul mit einem ersten Führungs- oder Antriebsmodul mit einer definierten Exzentrizität bezüglich dessen Rotationsachse gekoppelt ist und das zweite Koppelmodul an dem zweiten Führungsmodul gelagert oder angelenkt ist. Somit sind alle internen Getriebebewegungen beispielsweise auf leicht kontrollierbare Schwenkbewegungen zurückgeführt. Dies gelingt durch die genannte Verwendung von zwei Koppelmodulen pro Koppelmechanik, welche einer Relativbewegung fähig und dadurch in der Lage sind, auf unterschiedliche Abstände zwischen den Verbindungspunkten einer Koppelmechanik an den beiden Führungsteilen durch eine Änderung der Struktur, beispielsweise des Beugewinkels eines Kniegelenkes, zu reagieren. Die einzelnen Koppelmechaniken sind jedoch nicht direkt miteinander gekoppelt, weder im Bereich ihres Kniegelenks noch durch eine direkte exzentrische Ankopplung an ein mitrotierendes Drehteil.

Erfindungsgemäß ist je ein erstes oder zweites Koppelmodul jeder Koppelmechanik mit zumindest einem Freilauf direkt oder indirekt verbunden oder direkt oder indirekt gekoppelt, wobei ein jeweils anderer Anschluss des zumindest einen Freilaufs direkt oder indirekt mit der zweiten Welle gekoppelt ist, und zwar derart, dass die Transportbewegung des Auslenkungswinkels der Drehbewegung des betreffenden ersten oder zweiten Koppelmoduls zyklisch auf die zweite Welle oder ein mit dieser gekoppeltes Drehteil übertragen wird. Die Freiläufe können unterschiedlich ausgestaltet sein, vorzugsweise als Klemmkörperfreilauf mit mehreren, äquidistant über den Umfang verteilt angeordneten Klemmkörpern, oder als Klinkenfreilauf mit mehreren, äquidistant über den Umfang verteilt angeordneten, radial ein- und ausschwenkbaren Klinken, oder als Sägezahnfreilauf mit einer ersten, verzahnten Scheibe und mehreren, demgegenüber in axialer Richtung beweglichen, äquidistant entlang des Umfangs der ersten Scheibe verteilt angeordneten Sägezähnen, bspw. in Form eines an einer zweiten Scheibe umlaufend angeordneten Kranzes von umgekehrt orientierten Sägezähnen, die bei einer gesperrten Drehrichtung an den gegenüberliegenden Sägezähnen einrasten, in Freilauf-Drehrichtung jedoch daran entlanggleiten können. Gemeinsam ist diesen Freiläufen jedoch ein Aufbau mit zwei rotationssymmetrischen Elementen, die gegeneinander um ihre miteinander fluchtenden Rotationsachsen verdrehbar sind, dabei jedoch in einer Drehrichtung gehemmt werden.

Die resultierende, zusammengefasste Drehbewegung aller Koppelmechaniken wird einem Differentialgetriebemodul zugeführt, wo sie mit der Antriebsdrehzahl oder einem Anteil (vorzugsweise < 1, evtl. aber auch > 1) davon gegengekoppelt wird, um den Stellbereich, d.h., das Verhältnis von maximaler Ausgangsdrehzahl zu minimaler Ausgangsdrehzahl bei jeweils gleicher Antriebsdrehzahl, zu erweitern. Das Differentialgetriebemodul ist zu diesem Zweck auch mit der An- und der Abtriebswelle gekoppelt. Durch eine solche Gegenkopplung mit der vollen Antriebsdrehzahl bleibt die Ausgangswelle bei synchronem Betrieb im Stillstand, also ist die minimale Ausgangsdrehzahl null, und damit wird der Stellbereich unendlich groß. In einer bevorzugten Ausführungsform umfaßt das Differentialgetriebemodul zwei Differentialtellerräder mit je einem Zahnkranz an ihren einander zugewandten Innenseiten und aus einem dazwischen angeordneten Differentialkorb mit peripheren Zahn- oder Kegelrädern, die mit dem ersten und zweiten Differentialtellerrad in dauerhaftem Eingriff stehen. Das erste Differentialtellerrad ist beispielsweise mit den Freiläufen verbunden. Der Differentialkorb kann - gegebenfalls über ein Wendegetriebe - mit der An- oder Abtriebswelle gekoppelt sein, das andere Differentialtellerrad ist dann mit der jeweils anderen Anschlußwelle gekoppelt. Anstelle eins solchen "axialen" Differentials kann auch ein "radiales" Differential verwendet werden, das einem Planetengetriebe mit Sonnenrad, Hohlrad und Planetenrädern entspricht.

Vorteilhaft ist das erste Führungs-oder Antriebsmodul des stufenlosen Getriebes um eine Rotationsachse gegenüber dem Getriebechassis bzw. Getriebegehäuse drehbar gelagert und/oder von der ersten Welle (dreh-) antreibbar, bspw. durch ein mit der ersten Welle verbundenes Zahnrad, welches mit einer Verzahnung an dem ersten Führungs- oder Antriebsmodul kämmt.

Das erste Führungs- oder Antriebsmodul ist in einer Ausführungsform des stufenlosen Getriebes zumindest abschnittsweise scheibenförmig ausgebildet, wobei die Rotationsgerade näherungsweise senkrecht zu der das scheibenförmig ausgebildeten erste Führungs- oder Antriebsmodul durchsetzenden Grundebene verläuft. Hierbei weist das erste Führungs- oder Antriebsmodul wenigstens zwei scheibenförmige Abschnitte auf, die parallel zueinander und/oder in einem vorgegeben Abstand zueinander angeordnet sind. In einer bevorzugten Ausführungsform sind die zwei scheibenförmigen, zueinander parallel angeordneten Abschnitte des ersten Führungs- oder Antriebsmoduls drehfest miteinander verbunden, wobei zur drehfesten Verbindung beispielsweise wenigstens ein parallel zur Rotationsachse angeordnetes Hülsenelement vorgesehen ist. Das Hülsenelement ist alternativ entweder im Drehzentrum oder im Randbereich der beiden scheibenförmigen Abschnitte angeordnet. An diesem ersten Führungs- oder Antriebsmodul sind mehrere Koppelmodule exzentrisch angeschlossen, nämlich gelagert oder festgelegt, im folgenden kurz als Anlenkpunkte bezeichnet.

Vorteilhaft weist das zweite Führungsmodul eine rotationssymmetrische Führungsfläche auf, welche beispielsweise konvex gewölbt ist, insbesondere zylindrisch nach Art einer Führungsachse, oder konkav gewölbt ist, und zwar insbesondere hohlzylindrisch nach Art eines Auges. Diese Rotationsachse bildet eine allen angeschlossenen Koppelmodulen gemeinsame Stempunktachse, im folgenden kurz als Sternpunkt bezeichnet.

Das zweite Führungsmodul ist ferner gegenüber der Rotationsachse des ersten Führungs- oder Antriebsmoduls verstellbar, vorzugsweise verschiebbar ausgebildet. Besonders bevorzugt ist zu diesem Zweck das zweite Führungsmodul und damit der Sternpunkt gegenüber dem Gehäuse in einer Ebene verschiebbar, welche senkrecht zur Rotationsachse des ersten Führungs- oder Antriebsmoduls verläuft, so dass die Abstände zwischen dem Sternpunkt und den verschiedenen, exzentrischen Anlenkpunkten stets definiert vorgegeben sind.

Das zweite Führungsmodul kann insbesondere radial verschiebbar ausgebildet sein, und zwar bezüglich der Rotationsachse des ersten Führungs- oder Antriebsmoduls wobei das zweite Führungsmodul wiederum gegenüber dem Getriebechassis- oder Gehäuse verstellbar, insbesondere verschiebbar ist.

Vorteilhaft sind jeweils ein eine Koppelmechanik bildendes erstes und zweites Koppelmodul derart aneinander geführt oder gelagert oder drehbar miteinander verbunden sind, dass eine Änderung des Abstandes der Rotationsachse des ersten Führungs- oder Antriebsmoduls und der Rotationsachse des zweiten Führungsmoduls eine Relativbewegung wenigstens des ersten oder zweiten Koppelmoduls um dessen Rotationsachse zur Folge hat.

Vorzugsweise ist jeweils das erste Koppelmodul einer Koppelmechanik mit dem ersten Führungs- oder Antriebsmodul gekoppelt ist, und zwar derart, dass das erste Koppelmodul wenigstens einen der scheibenförmigen Abschnitte des ersten Führungs- oder Antriebsmodul exzentrisch zu dessen Rotationsachse durchsetzt.

Je ein mit dem ersten Führungs- oder Antriebsmodul gekoppeltes erstes Koppelmodul jeder Koppelmechanik ist in einer besonders bevorzugten Ausführungsform als Transmissionsmodul ausgebildet, das in wenigstens einem der scheibenförmigen Abschnitte des ersten Führungs- oder Antriebsmoduls exzentrisch zu dessen Rotationsachse um eine Rotationsachse drehbar gelagert ist.

Die scheibenförmigen Abschnitte des ersten Führungs- oder Antriebsmoduls weise Ausnehmungen zur Aufnahme eines Transmissionsmoduls auf, welche vorzugsweise kreiszylinderförmig ausgebildet sind.

Ferner kann ein Transmissionsmodul jeweils eine Transmissionsstange und einen mit diesem starr verbundenen Antriebshebel umfassen oder aus jeweils eine Transmissionsscheibe bzw. einen Transmissionszylinder aufweisen.

Vorteilhaft weist jeweils ein mit dem zweiten Führungsmodul gekoppeltes zweites Koppelmodul eine zu dessen rotationssymmetrischer Führungsfläche komplementäre Fläche aufweist.

In einer besonders bevorzugten Ausführungsform ist ein mit dem zweiten Führungsmodul gekoppeltes zweites Koppelmodul als Antriebshebel ausgebildet, wobei die Antriebshebel jeder Koppelmechanik unabhängig voneinander drehbar um die Rotationsachse einer rotationssymmetrischen Führungsfläche des ersten Führungsmoduls gelagert sind. Die Antriebshebel weisen insbesondere zur unabhängigen drehbaren Lagerung um die Rotationsachse einer Führungsfläche, insbesondere einer Führungsachse, jeweils eine Lagerhülse auf.

Zur unabhängigen drehbaren Lagerung um die Führungsachse weisen die Antriebshebel jeweils eine im zweiten Führungsmodul in einem Lagersternpunkt angeordnete und jeweils senkrecht vom Antriebshebel wegstehende Hülsen unterschiedlichen Querschnitts auf, die vorzugsweise ineinander greifen.

An jedem mit dem ersten internen Führungs- oder Antriebsmodul gekoppelten ersten Koppelmodul, insbesondere Transmissionsmodul, ist exzentrisch zu dessen Rotationsachse eine Fläche zur Kopplung mit dem jeweils zweiten Koppelmodul, insbesondere Antriebshebel vorgesehen, die parallel und/oder senkrecht zu der Rotationsachse verläuft. Die Fläche des mit dem ersten internen Führungs- oder Antriebsmoduls gekoppelten ersten Koppelmoduls, insbesondere Transmissionsmoduls ist zur Kopplung mit dem zweiten Koppelmodul, insbesondere Antriebshebel, als rotationssymmetrische Verbindungsfläche ausgebildet. Hierbei kann die rotationssymmetrische Verbindungsfläche konvex gewölbt, insbesondere zylindrisch nach Art einer Verbindungsachse, oder konkav gewölbt, insbesondere hohlzylindrisch nach Art eines Verbindungsauges, ausgebildet sein.

Die mit dem ersten Führungs- oder Antriebsmodul gekoppelten ersten Koppelmodule, insbesondere die Transmissionsmodule, weisen in vorteilhafter Weise wenigstens je eine Führungsöffnung zur Aufnahme von zumindest einem fest mit dem jeweils zugeordneten zweiten Koppelmodul verbundenen Stiftelement auf, welche beispielsweise als kreisrunde Öffnungen oder als Langlöcher ausgebildet sind.

Die Mittelachse der Führungsöffnungen verläuft bevorzugt parallel zur Rotationsachse des ersten Führungs- oder Antriebsmoduls, insbesondere dessen scheibenförmigen Abschnitten.

Ferner ist eine zu der rotationssymmetrischen Verbindungsfläche komplementäre Fläche an dem zugeordneten zweiten Koppelmodul, insbesondere Antriebshebel vorgesehen.

Die als Langlöcher ausgebildeten Führungsöffnungen eines Transmissionsmoduls werden beispielsweise mit dem jeweils zugeordneten zweiten Koppelmodul, insbesondere Antriebshebel über zumindest ein Führungselement verbunden.

Die Fläche des mit dem ersten internen Führungs- oder Antriebsmoduls gekoppelten ersten Koppelmoduls, insbesondere Transmissionsmoduls, ist zur Kopplung mit dem jeweils zweiten Koppelmodul, insbesondere Antriebshebel, als Zahnreihe oder Reibfläche ausgebildet ist.

Das mit dem zweiten Führungs- oder Antriebsmodul gekoppelte erste Koppelmodul, insbesondere Transmissionsmodul, ist zum Eingriff in die Zahnreihe des jeweils zugeordneten zweiten Koppelmoduls, insbesondere Antriebshebels, ausgebildet.

Vorteilhaft werden die über die zumindest zwei Koppelmechaniken erzeugten Drehbewegungen jenseits der angeschlossenen Freiläufe zusammengefasst, wobei die Freiläufe derart zueinander angeordnet sind, dass stets die in einer gemeinsam orientierten Drehrichtung schnellste Drehbewegung weitergegeben wird. Hierzu eignen sich besonders verzahnte Planetenräder am abtriebsseitigen Ende der Freiläufe, welches alle mit einem gemeinsamen, verzahnten Sonnenrad kämmen.

Mit dem erfindungsgemäßen Getriebe gelingt es, das Kniegelenk der genannten Kopplungsmechanismen allein durch den Schnitt- bzw. Anschlußpunkt zweier Koppelmodule zu definieren, welche mit ihren anderen Anschlußpunkten an je einem Führungsmodul beispielsweise drehbeweglich gelagert sind, ohne dass dabei Kräfte von dritter Seite an dem jeweiligen Kniegelenk angreifen.

Von besonderer Bedeutung ist ferner, dass durch die beschriebene Führung bzw. Lagerung bzw. Kopplung der zwei Koppelmodule einer Koppelmechanik eine Veränderung des Abstandes zwischen dem betreffenden Anlenkpunkt bzw. der Rotationsachse an dem ersten Führungs- oder Antriebsmodul und dem Sternpunkt an dem zweiten Führungsmodul eine Relativverdrehung wenigstens eines Koppelmoduls um dessen Anlenk- oder Rotationsachse an dem entsprechenden Führungsmodul zur Folge hat, die anschließend abgegriffen wird und die Drehung der Abtriebswelle beeinflußt.

Wichtig ist ferner, dass das Knie zwischen den beiden Koppelmodulen einer Koppelmechanik je einen zentralen Bereich beider Führungsmodule umläuft. Dies wird bei einem durch ein Gelenk gebildetes Knie dadurch erreicht, dass die Summe der Abstände d₁, d₂ dieses Kniegelenks zu den jeweils anderen Verankerungspunkten der beiden Koppelmodule, nämlich dem Sternpunkt einerseits und dem exzentrischen Anlenkpunkt andererseits, stets größer ist als die maximal einstellbare Exzentrizität e zwischen den beiden Führungsmodulen: e < d₁+ d₂.

Um einem unrunden, d.h. vibrationsbehafteten Laufen des erfindungsgemäßen Getriebes vorzubeugen, kann wenigstens ein Koppelmodul pro Koppelmechanik als Scheibe bzw. Zylinder ausgebildet sein und/oder ein Gegengewicht aufweisen.

Die Übersetzung des erfindungsgemäßen stufenlos regelbaren Getriebes kann unter voller Last verändert werden. Daher ist das Getriebe besonders geeignet für Schwerlastantriebe, bspw. in Lokomotiven, Lastkraftwägen, Großbearbeitungs-Werkzeugmaschinen sowie Windkraftmaschinen. Im Unter- bis Mittellastbereich kann es darüber hinaus u.a. für Kraftfahrzeuge, Motorräder, Fahrräder und Wärmepumpen eingesetzt werden.

Weitere Merkmale, Eigenschaften, Vorteile und Wirkungen auf der Basis der Erfindung ergeben sich aus der folgenden Beschreibung bevorzugter Ausführungsformen der Erfindung sowie anhand der Zeichnung. Hierbei zeigt:
- Fig. 1: einen Schnitt durch ein erfindungsgemäßes Getriebe;
- Fig.2a: eine Ansicht auf die Fig. 1 in Richtung des Pfeils II, wobei das Getriebe auf ein erstes Übersetzungsverhältnis eingestellt ist, bei welchem die Ausgangswelle stillsteht;
- Fig.2b: eine der Fig. 2a entsprechende Darstellung des Getriebes aus Fig. 1 mit einer anderen eingestellten Übersetzung, bei der sich die Ausgangswelle dreht;
- Fig. 3a: das Detail IIIa aus Fig. 2a,b;
- Fig. 3b: eine Seitenansicht auf die Fig. 3a in Richtung des Pfeils IIIb;

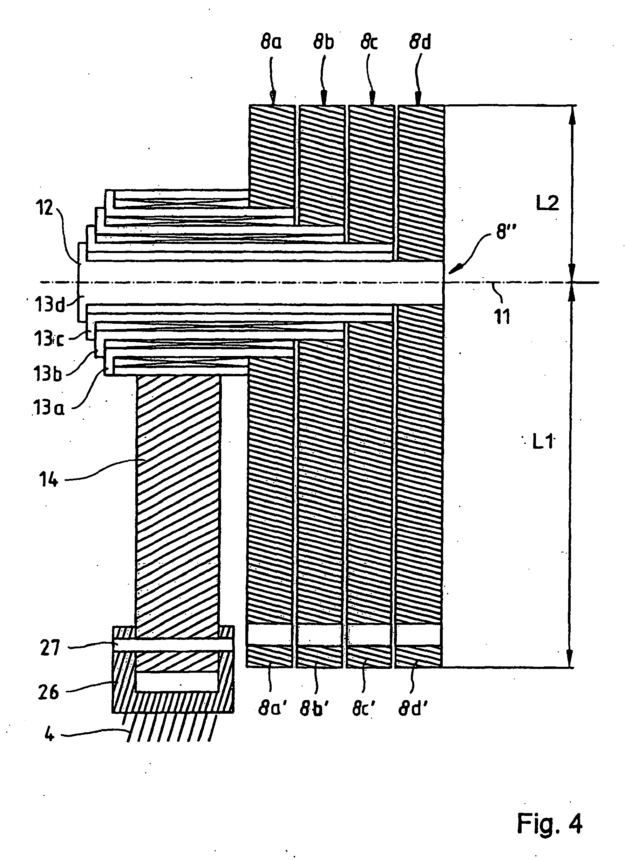

- Fig. 4: das Detail IV aus Fig. 1 in einer schematischen Darstellungbeispielhaft den Aufbau und die drehbare Lagerung von einzelnen Antriebshebeln mit Führungshebel;

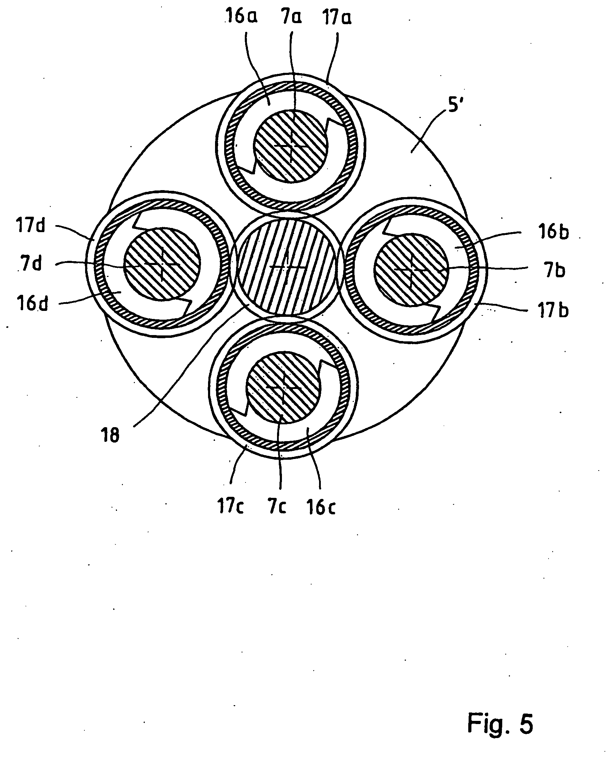

- Fig. 5: einen Schnitt durch die Fig. 1 entlang der Linie V - V;
- Fig. 6a: eine etwa der Fig. 3a entsprechende Darstellung mit einer abgewandelten Koppelmechanik;
- Fig. 6b: eine der Fig. 6a entsprechende Darstellung einer anderen Koppelmechanik;
- Fig. 6c: eine etwa der Fig. 6a entsprechende Darstellung einer wiederum anderen Koppelmechanik;
- Fig. 7a: eine der Fig. 2a entsprechende Darstellung einer anderen Ausführungsform eines erfindungsgemäßen Getriebes;
- Fig. 7b: eine der Fig. 2b entsprechende Darstellung des Getriebes aus Fig. 7a; sowie
- Fig.7c: eine etwa der Fig. 6a entsprechende Darstellung einer anderen Koppelmechanik, insbesondere zum Einbau in das Getriebe nach Fig. 7a und 7b.

Das stufenlose Getriebe 1 dient zur Übersetzung der Drehzahl einer Antriebswelle 2 in eine variable Drehzahl der Abtriebswelle 3. Zu diesem Zweck ist an einem Chassis 4, das vorzugsweise mit einem Gehäuse versehen, verbunden oder kombiniert ist, ein drehbar gelagertes Führungs- oder Antriebsmodul, vorzugsweise in Form einer mit der Antriebswelle 2 gekoppelten Scheibe 5 auf, bspw. über ein erstes Zahnrad das mit einer Außenverzahnung an der Scheibe 5 kämmt.

Die angetriebene Scheibe 5 weist eine erste und eine zweite Ausnehmung 6 auf, die ist bevorzugt kreiszylinderförmig ausgebildet und in äquidistanten Abständen entlang einer Kreislinie um eine parallel zur Antriebsachse AA des Getriebes 1 verlaufende Achse angeordnet sind, bspw. einander diametral gegenüberliegend. In einer bevorzugten Ausführungsform sind erste bis vierte Ausnehmungen 6a - 6d vorgesehen, die vorzugsweise als kreiszylinderförmige Öffnungen ausgebildet sind, wobei deren Mittelpunktsachsen M1 - M4 parallel zu der Antriebsachse AA des Getriebes 1 orientiert sind und vorzugsweise symmetrisch zu einem auf der Antriebsachse AA befindlichen Mittelpunkt M angeordnet sind, der zugleich als Drehzentrum der Antriebsscheibe 5 fungiert. Die Abstände ihrer Mittelpunktsachsen M1 - M4 zum Mittelpunkt M der Antriebsscheibe 5 stimmen vorzugsweise allesamt überein, oder nur paarweise oder sie sind unterschiedlich zueinander. Die Mittelpunktsachsen M1 - M4 der vier Ausnehmungen 6a - 6d sind bezüglich der Zentralachse AA vorzugsweise um jeweils 90° gegeneinander versetzt.

Die Ausnehmungen 6a - 6d weisen übereinstimmende, paarweise übereinstimmende oder unterschiedliche Radien r1- r4 auf. In diesen vier Ausnehmungen 6a - 6d ist jeweils ein um die betreffende Mittelachse M1 - M4 drehbar gelagertes, erstes bis viertes Koppelmodul, vorzugsweise Transmissionsmodul 7a - 7d aufgenommen, welches in einer bevorzugten Ausführungsform als Transmissionsstange, -rohr, -scheibe oder -zylinder ausgebildet ist. Die Koppelmodule bzw. Transmissionsmodule 7a - 7d sind jeweils in einer der Ausnehmungen 6a - 6d drehbar gelagert, und zwar um die dortige Mittelpunktsachse M1 - M4. Zur drehbaren Lagerung der Transmissionsmodule 7a - 7d in den Ausnehmungen 6a - 6d können beispielsweise Nadellager oder ähnlich wirkende Lagerelemente vorgesehen sein.

Ferner stehen die Koppelmodule bzw. Transmissionsmodule 7a - 7d mit jeweils einem weiteren Koppelmodul, beispielsweise einem Antriebshebel 8a - 8d in Verbindung, und zwar beispielsweise drehbar gelagert oder geführt. Jeweils ein Koppelmodul 7a - 7d bildet zusammen mit einem weiteren Koppelmodul 8a - 8d je eine Koppelmechanik aus.

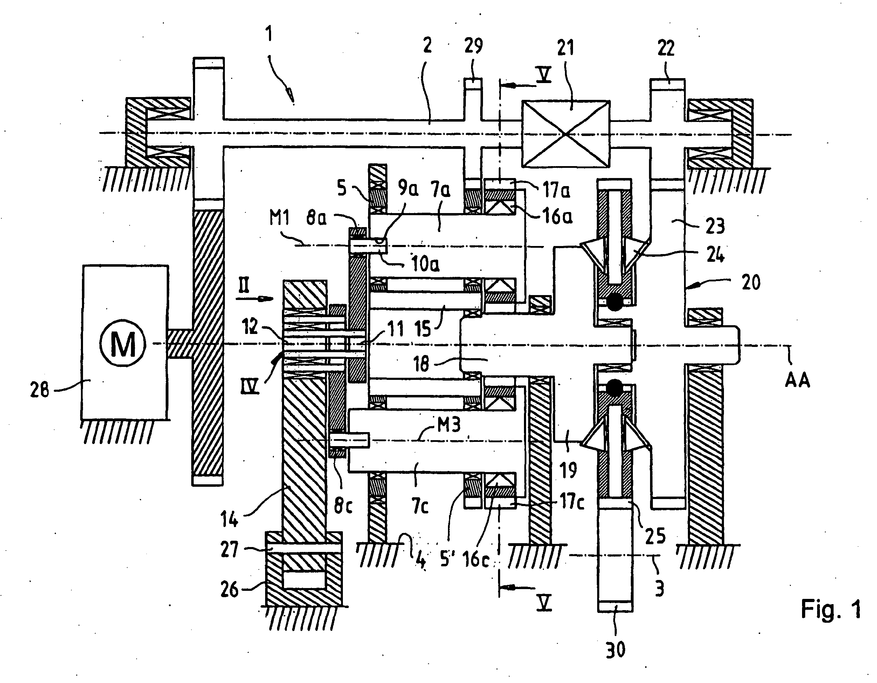

Bei der Ausführungsform nach Fig. 1 sind die Transmissionsmodule 7a - 7d jeweils als kreiszylinderförmige Transmissionsscheiben bzw. Transmissionszylinder ausgebildet, beispielsweise von der Form je eines Rohrhülsenelementes mit einer massiv ausgeführten kreisscheibenförmigen Stirnseite.

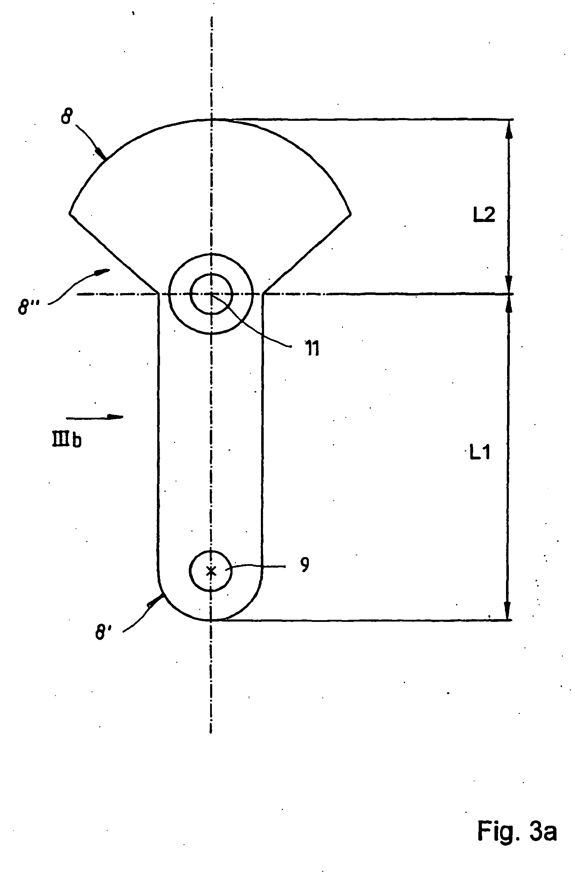

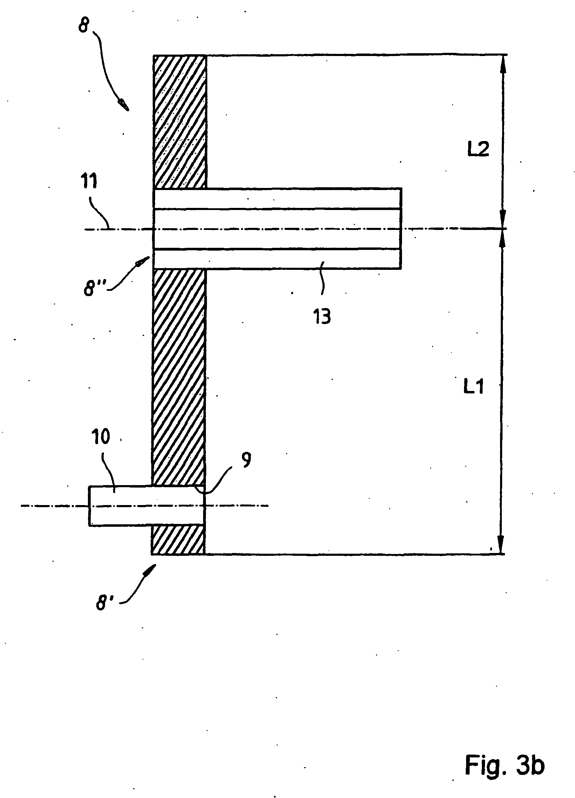

Zur Befestigung eines beispielhaft in den Fig. 3a, 3b dargestellten Antriebshebels 8a - 8d an einer Transmissionsscheibe 7a - 7d ist jeweils an deren Stirnseite in einem Abstand d1 - d4 von der betreffenden Mittelpunktsachse M1 bis M4 und damit exzentrisch eine Führungsöffnung 9a bis 9d zur Aufnahme je eines Stiftelementes 10a - 10d vorgesehen, das dort während des Betriebes des Getriebes 1 zur Übertragung von Drehmomentkräften dient.

Das jeweils zweite Hebelende der Antriebshebel 8a - 1d ist zu einem gemeinsamen Lagersternpunkt 11 geführt, wobei die Antriebshebel 8a - 8d in dem Lagersternpunkt 11 unabhängig voneinander und schwenkbeweglich zueinander gelagert sind. Hierbei ist im Lagersternpunkt 11 beispielsweise eine parallel zur Antriebsachse AA verlaufende Führungswelle 12 vorgesehen, um welche die Antriebshebel 8a - 8d drehbar gelagert sind.

Hierzu weisen die Antriebshebel 8a - 8d jeweils eine senkrecht in Richtung des Lagersternpunktes 11 wegstehende Hülse 13a - 13d, vorzugsweise mit integrierten Lagerelementen, auf, die ineinander steckbar sind, da die Durchmesser der Hülsen 13a - 13d der Antriebshebel 8a - 8d unterschiedlich ausgebildet sind.

In den Fig. 3a und 3b ist einer der Antriebshebel 8a - 8d dargestellt. Ein Antriebshebel 8a - 8d weist eine erste Hebelstrecke I1 sowie eine zweite Hebelstrecke l2 auf. Die zweite Hebelstrecke I2 weist in einer bevorzugten Ausführungsform ein Ausgleichsgewicht auf, wie es häufig bei Kurbelgetrieben Verwendung findet. Infolge des jeweils zugeordneten Ausgleichsgewichts sind die Antriebshebel 8a - 8d bzgl. des Lagersternpunktes 11 ausgewuchtet, so dass ein nahezu vibrationsfreier Betrieb der gesamten Hebelanordnung möglich ist. Insbesondere bei einem Betrieb des stufenlosen Getriebes 1 bei hohen Drehzahlen ist eine derartige radialsymmetrische Auswuchtung der Antriebshebel 8a - 8d um den Lagersternpunkt 11 empfehlenswert.

Bei einer alternativen Ausführungsform weist jeder Antriebshebel 8a - 8d anstelle der ineinander greifenden Hülsen 13a - 13d jeweils ein Auge auf, das jeweils denselben Durchmesser aufweist und jeweils eine zentrale Führungsachse als Lagersternpunkt 11 umgreift.

Die Hülsen 13a - 13d bzw. Augen sind somit an dem Lagersternpunkt 11 gelagert, der als Führungshülse oder Führungswelle 12 eines Führungshebels 14 ausgebildet ist. Letzterer ist an dem Getriebegehäuse verschwenk- oder verschiebbar verankert und hat die Aufgabe, den gemeinsamen Lagersternpunkt 11 der Antriebshebel 8a bis 8d einerseits festzulegen und bietet andererseits die Möglichkeit, dessen Lage beeinflussen zu können, d.h. insbesondere zu verschwenken oder verschieben, um diesen von dem Mittelpunkt M bzw. von der Antriebsachse AA der Antriebsscheibe 5 auszulenken.. Hierbei kann die Auslenkung entlang einer senkrecht zur Antriebsachse AA verlaufenden Ebene erfolgen, insbesondere entlang einer Linie oder Kreisbahn.

Wie der Zeichnung entnehmbar ist, können die Transmissionsmodule 7a - 7d in zwei zueinander parallelen Antriebsscheiben 5, 5' gelagert sein. Die beiden Antriebsscheiben 5, 5' sind deckungsgleich ausgebildet und über eine vorzugsweise zentrale Hülse 15 drehfest miteinander verbunden. Auch die zweite Antriebsscheibe 5' weist somit ebenfalls eine erste und zweite bzw. erste bis vierte Ausnehmungen 6a' - 6d' auf, in denen die Transmissionsmodule 7a - 7d drehbar gelagert sind. Durch den Abstand D zwischen den beiden Scheiben 5, 5', welcher etwa der Länge der Verbindungshülse 15 entspricht, werden auf die Transmissionsmodule 7a - 7d infolge der exzentrischen Ankopplung der Antriebshebel 8a - 8d einwirkende Kippmomente abgeleitet.

Ferner ist mit jedem Transmissionsmodul 7a - 7d mindestens ein Freilauf 16a - 16d direkt oder indirekt gekoppelt. Hierfür eignen sich einfache, eindirektional wirkende Freilaufkupplungen, z.B. Klemmrollenfreiläufe. Alternativ können in jeweils eine Arbeitsrichtung umschaltbare Freilaufkupplungen (z.B. Klinkenfreiläufe) verwendet werden. Auch sind hydraulische Freilaufkupplungen und/oder von außen schaltbare und/oder steuerbare elektromagnetische Kupplungen vorsehbar.

Die Kopplung zwischen den Transmissionsmodulen 7a - 7d und den Freiläufen 16a - 16d kann als direkte starre Verbindung ausgestaltet sein, so dass ein Ring jedes Freilaufs 16a - 16d stets dieselbe Drehzahl erfährt wie das zugeordnete Transmissionsmodul 7a - 7d. Statt dessen kann die Kopplung jedoch auch über ein Getriebe erfolgen, so dass die Drehzahl eines Ringes jedes Freilaufs 16a - 16d stets proportional zu der Drehzahl des zugeordneten Transmissionsmoduls 7a - 7d ist, jedoch vorzugweise deutlich größer als letztere, bspw. mindestens doppelt so groß. Da eine solche Drehzahlübersetzung stets mit einer Drehmomentuntersetzung einhergeht, lassen sich damit die von einem Freilauf im Sperrzustand zu übertragenden Drehmomente deutlich reduzieren, so dass dessen Belastung und damit auch dessen Baugröße erheblich gesenkt wird. Eine solche Kopplung kann bspw. mittels eines oder mehrer Planetengetriebe erfolgen.

Über diese Freiläufe 16a - 16d werden die Drehbewegungen der Transmissionsmodule 7a - 7d voneinander weitgehend entkoppelt. Jenseits dieser Freiläufe 16a - 16d befindet sich je ein verzahntes Planetenrad 17a - 17d. Diese Planetenräder 17a - 17d kämmen allesamt mit einem gemeinsamen Sonnenrad 18.

Dieses Sonnenrad 18 ist mit einem ersten Anschluß eines Differentialgetriebemoduls 20, vorzugsweise einem ersten Differentialtellerrad 19, drehfest gekoppelt oder verbunden. Hierbei ist das erste Differentialtellerrad 19 beispielsweise drehbar um die Antriebsachse AA der Antriebsscheiben 5, 5' ausgebildet.

Die Drehbewegung der Antriebswelle 2 wird über ein Wendegetriebe 21 und ein Zahnrad 22 auf einen anderen Anschluß eines Differentialgetriebemoduls 20 übertragen, vorzugsweise auf ein zweites Differentialtellerrad 23. Ein solches zweites Differentialtellerrad 23 kann spiegelbildlich zum ersten Differentialtellerrad 19 ausgebildet sein und ist ebenfalls drehbar um die Antriebsachse AA der Antriebsscheiben 5, 5' angeordnet.

Zwischen den beiden Differentialtellerrädern 19, 23 ist ein beispielsweise als kreisringförmiger, mit verzahnten Kegelrädern 24 bestückter Träger bzw. Differentialkorb 25 angeordnet, dessen Kegelräder 24 mit den beiden Differentialtellerrädern 19, 23 in dauerhaftem Eingriff stehen.

Alternativ zu einem axialen Differential, wobei die gegeneinander verdrehbaren Differentialtellerräder 16, 23 in axialer Richtung gegeneinander versetzt sind, kann zur Gegenkopplung der Eingangsdrehzahl auch ein sog. radiales Differential in Form eines Planetengetriebes verwendet werden, wobei dessen Sonnenrad dem einen Differentialtellerrad und das Hohlrad dem anderen Differentialtellerrad entsprechen kann, während solchenfalls der Planetenradträger die Aufgabe des Differentialtellerkorbes erfüllen kann.

Das erfindungsgemäße Getriebe 1 funktioniert wie folgt:

Durch Verstellen des Führungshebels 11 beispielsweise in azimutaler Richtung um seinen Lagerbock 26 wird der Lagersternpunkt 11 zunächst derart eingestellt, dass der Mittelpunkt M der Antriebsscheibe 5 und der Lagersternpunkt 11 der Antriebshebel 8a bis 8d in einer gemeinsamen Flucht liegen. Dies ist deshalb möglich, weil der Lagersternpunkt 11 und der Mittelpunkt M der Antriebsscheibe 5 den selben radialen Abstand zu der Schwenkachse 27 des Lagerbocks 26 aufweisen.

Wird nun das Getriebe 1 von einer Motorbaugruppe 28 angetrieben, so ändert sich während eines Umlaufs der angetriebenen Scheibe 5 der Abstand des Lagersternpunktes 11 gegenüber den Mittelpunktsachsen M1 - M4 der Transmissionsmodule 7a - 7d nicht, und demzufolge erfährt jeder einzelne Antriebshebel 8a bis 8d eine konstante Rotationsbewegung um die Achse AA entsprechend der Rotationsgeschwindigkeit der Antriebsscheibe 5, d.h. die Transmissionsmodule 7a - 7d verharren bei rotierender Antriebsscheibe 5 jeweils in derselben Relativstellung bezüglich der Drehachse AA bzw. erfahren keine Eigenrotationsbewegung.

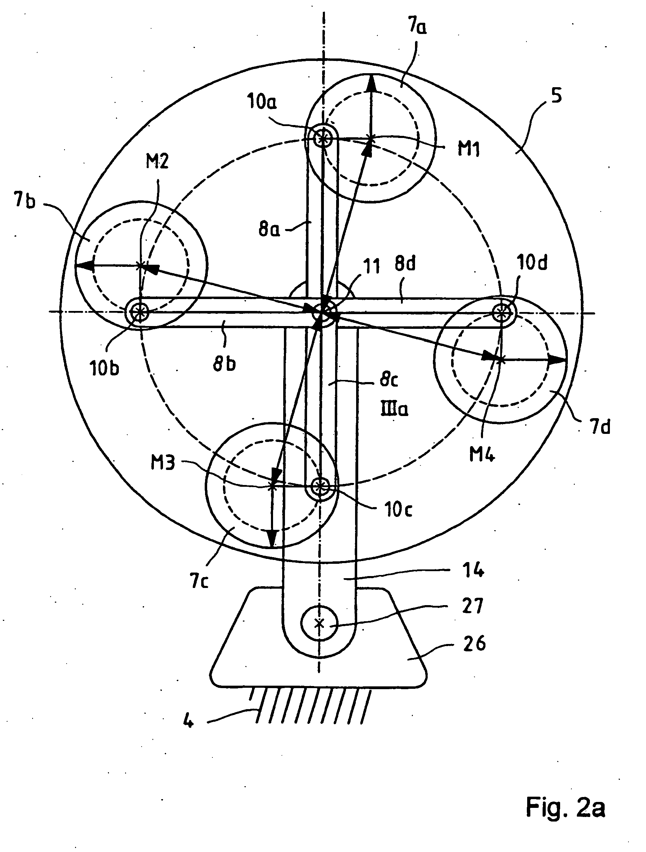

Für diesen Fall ist in Fig. 2a die Antriebsscheibe 5 mit den Ausnehmungen 6a - 6d und den darin drehbar gelagerten Transmissionsscheiben 7a - 7d dargestellt. In diesem Betriebszustand rotieren alle Antriebshebel 8a - 8d mit der Drehgeschwindigkeit der Antriebsscheiben 5, 5' um den Lagersternpunkt 11. Die Transmissionsmodule 7a - 7d erfahren keine Drehbewegung um Ihre Mittelpunktsachsen M1 - M4. Also erfahren auch die Planetenräder 17a - 17 d keine Eigenrotationsbewegung, und das mit diesen kämmende Sonnenrad 18 läuft synchron mit der Antriebsscheibe 5 um.

Das Übersetzungsverhältnis von der Antriebswelle 2 über die Antriebsscheibe 5 zu dem ersten Differentialtellerrad 19 ist entgegengesetzt gleich dem Übersetzungsverhältnis von der Antriebswelle 2 über das Wendegetriebe 21 zu dem zweiten Differentialtellerrad 23. Dies ist bspw. dann der Fall, wenn die Antriebsscheibe 5 den selben Durchmesser wie das Differentialtellerrad 23 hat und die jeweils damit kämmenden Zahnräder 29, 22 auf der Antriebswelle 2 gleich groß sind und das Wendegetriebe 21 eine Übersetzung von -1 hat.

Dadurch sind die Drehzahlen der beiden Differentialtellerräder 19 exakt gleich groß, jedoch entgegengesetzten zueinander. Folglich erfährt der Differentialkorb 25 dank des Eingriffs der Kegelräder 24 mit beiden Differentialtellerrädern 16, 23 keine Drehbewegung, d.h. dieser steht (nahezu) still.

In der genannten Stellung befindet sich der Führungshebel 14 in seiner Grundstellung, d.h. die durch das stufenlose Getriebe 1 realisierbare Übersetzung ist gleich Null.

Das in der Grundstellung des Führungshebels 14 vorliegende Gesamt-Übersetzungsverhältnis von der Antriebswelle 2 zur Abtriebswelle 3 kann durch eine andere Dimensionierung des Wendegetriebes 21 und/oder der Zahnräder 22 und/oder 29 auch anders voreingestellt werden, bspw. vergleichbar dem ersten oder Anfahrgang eines mit einer Kupplung versehenen Getriebes.

Um das Übersetzungsverhältnis während des Betriebes zu variieren, wird der Führungshebel 14 derart um seine Lagerachse 27 an dem Lagerbock 26 verschwenkt, dass der Lagersternpunkt 11 gegenüber dem Mittelpunkt bzw. Drehzentrum M der Antriebsscheibe 5 ausgelenkt wird und sich außerhalb der Antriebsachse AA befindet.

Nun werden zyklische Impulsbewegungen der Transmissionsscheiben 7a - 7d erzeugt, welche über die Transmissionsmodule 7a - 7d bzw. diesen zugeordnet Freiläufe 16a - 16d am ersten Differentialtellerrad 19 zusätzliche Drehbewegungen hervorrufen, die sich zu der Drehzahl der Antriebsscheibe 5 addieren oder davon subtrahieren. Da das zweite Differentialtellerrad 23 gegenläufig zum Differentialtellerrad 19 angetrieben wird, wird wiederum die über die Antriebswelle 2 und über das Zahnrad 29 auf die Antriebsscheibe 5 auf das erste Differentialtellerrad 19 übertragene Drehbewegung subtraktiv herausgefiltert, und es gelangt lediglich die über die Transmissionsmodule 7a - 7d zusätzlich erzeugte, von der Auslenkung des Führungshebels 14 abhängige Drehbewegung auf den Differentialkorb 25. Zur Übertragung dieser "Differenzdrehbewegung" auf die Abtriebswelle 3 ist der Differentialkorb 25 beispielsweise über ein weiteres Zahnrad 30 mit der Abtriebswelle 3 direkt oder indirekt verbunden. Somit liegt ein Übersetzungsverhältnis ungleich Null vor, vorzugsweise größer als Null.

Durch Verstellung des Führungshebels 14 bzw. Änderung der Abstände a, b, c, d zwischen dem Lagersternpunkt 11 bzw. dem Drehzentrum der Antriebshebel 8a - 8d und den Mittelpunkten bzw. Mittelachsen M1 - M4 der in den Ausnehmungen 6a - 6d der Antriebsscheibe 5 vorgesehenen Transmissionsmodule 7a - 7d wird der Umlaufweg der Antriebsscheibe 5 durch den beispielsweise radialen Versatz des Lagersternpunktes 11 der Antriebshebel 8a - 8d in einzelne, zeitlich gegeneinander versetzte bzw. unsynchrone Umlaufwege der Antriebshebel 8a - 8d und der mit ihnen verbundenen Transmissionsmodule 7a - 7d umgesetzt. Hierdurch wird eine Relativbewegung zwischen den Antriebshebein 8a - 8d und den Transmissionsmodulen 7a - 7d in jeder Koppelmechanik erzeugt.

Jeder Antriebshebel 8a - 8d wird hierdurch bei einer 360°-Drehung der Antriebsscheibe 5 zyklisch in einem bestimmten Winkelbereich schneller bzw. langsamer. Der schnellste Antriebshebel 8a - 8d treibt hierbei das mit ihm in Verbindung stehende Transmissionsmodul 7a - 7d mit dem zugeordneten Freilauf 16a -16d an und bestimmt dadurch das Übersetzungsverhältnis. Insbesondere tritt hierdurch eine Änderung der von jeweils zwei Antriebshebeln 8a - 8d eingeschlossenen Winkel α,β,γ,δ auf.

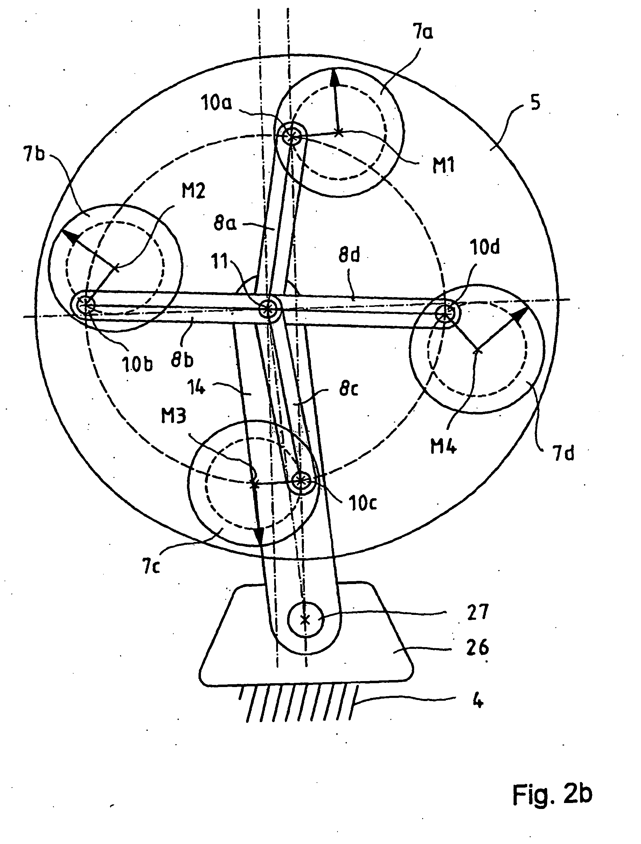

In Fig. 2b ist die Antriebsscheibe 5 mit den Ausnehmungen 6a - 6d und darin drehbar gelagerten Transmissionsscheiben 7a - 7d bei von der Antriebsachse AA bzw. dem Mittelpunkt M des Antriebsrades 5 ausgelenktem Lagersternpunkt 11 bzw. Führungshebels 14 dargestellt. Die jeweils mittels einer Linie und einer strichliert angedeuteten Silhouette dargestellten Antriebshebel 8a - 8d sind in einer mit einem Führungshebel 14 verbundenen Führungshülse 13 drehbar gelagert und mit je einer der Transmissionsscheiben 7a - 7d verbunden.

Ausgehend von einer sich entgegen dem Uhrzeigersinn drehenden Antriebsscheibe 5 folgen die Antriebshebel 8a - 8d einer von dem "exzentrisch" eingestellten Lagersternpunkt 11 erzwungenen Auslenkbewegung zyklisch. Da die Transmissionsmodule 7a - 7d in der Antriebsscheibe 5 drehbar gelagert sind, werden über die Antriebshebel 8a - 8d die in den vorgegebenen Abständen d1 - d4 bezüglich des Mittelpunktes M1 - M4 befindlichen Führungsöffnungen 9a - 9d und somit die Transmissionsmodule 7a -7d um einen Auslenkwinkel ω zyklisch ausgelenkt. Dabei beschreiben die Führungsöffnungen 9a - 9d jeweils eine Kreisbahn mit vorgegebenen Radien d1 bis d4 um die Mittelpunkte bzw. Mittelachsen M1 bis M4 der Ausnehmungen 6a - 6d. Diese Oszillationsbewegung ist vor allem dadurch begrenzt, dass der Winkel an dem "Knie" zwischen einem Antriebshebel 8a - 8d und dem betreffenden Transmissionsmodul 7a - 7d, also bei den Führungsöffnungen 9a - 9d, die Grenzwerte 0° einerseits und 180° andererseits nicht überschreiten darf, damit der Betriebszustand stets wohl definiert ist.

Befinden sich der Mittelpunkt M der Antriebsscheiben 5, 5' und der Lagersternpunkt 11 in einem Abstand bzw. Versatz zueinander, so lenkt beispielsweise der zweite Antriebshebel 8b das zweite Transmissionsmodul 7b am schnellsten aus, und gleichzeitig hat der vierte Antriebshebel 8d einen starken Einfluß auf die Drehbewegung des vierten Transmissionsmoduls 7d, jedoch in umgekehrter Drehrichtung. Der mit dem zweiten Transmissionsmodul 7b in Verbindung stehende Freilauf 16b überträgt diese Bewegung auf die Abtriebswelle 3, und zwar über das Differentialgetriebemodul 20. Folglich überlagert sich zu der über das Zahnrad 19 auf die Antriebsscheibe 5' übertragenen Drehgeschwindigkeit die Drehgeschwindigkeit der zweiten Transmissionsscheibe 7b additiv oder subtraktiv. Dieser Vorgang wiederholt sich im dargestellten Beispiel im Rahmen einer 360°-Drehung im Uhrzeigersinn zyklisch.

Der Innenring eines Freilaufes 16a - 16d ist mit jeweils einem der Transmissionsmodule 7a - 7d verbunden, so dass im Sperrzustand der jeweiligen Freilaufmechanik 16a - 16d eine Übertragung der Drehbewegung eines Transmissionsmoduls 7a - 7d über die Außenverzahnung an dem betreffenden Planetenrad 17 auf das zugeordnete Sonnenrad 18 stattfindet. Im Verlauf einer vollständigen 360°-Drehung der Antriebsscheibe 5 werden daher die Transportbewegungen jedes einzelnen Transmissionsmoduls 7a - 7d sequentiell auf das Sonnenrad 19 übertragen, und zwar immer denn, wenn ein Transmissionsmodul 7a - 7d die schnellste Relativdrehung um seine Achse M1 - M4 erfährt.

Die minimale (oder maximale) Drehzahl des Sonnenrades 18 entspricht der Drehzahl der Antriebsscheiben 5, 5' (synchroner Betrieb), die maximale (bzw. minimale) Drehzahl des Sonnenrades 18 ergibt sich aus der Drehzahl der Antriebsscheiben 5, 5' plus (minus) der jeweils schnellsten Oszillationsdrehung eines Transmissionsmoduls 7a - 7d. Um einen möglichst großen relativen Übersetzungsbereich zu erhalten, wird von dieser Drehzahl des Sonnenrades 19 die Drehzahl der Antriebsscheiben 5, 5' durch Gegenkopplung in dem Differential 20 subtrahiert. Wird die Drehgeschwindigkeit des ersten und zweiten Differentialtellerrades 19, 23 dagegen unterschiedlich gewählt, so läßt sich eine durch die Drehzahldifferenz vorgebbare "Grund"-Drehzahl einstellen.

Der durch den Abgriff über die Freiläufe 16a - 16d erzeugte Kraftfluss ist nichtlinear, sondern oberwellenbehaftet. Er kann jedoch mittels einer Glättungseinrichtung, beispielsweise mit einer zwischen dem Abtrieb der Freiläufe 16a - 16d und dem Eingang des Differentials 25, vorzugsweise an oder vor dem Differentialtellerrad 19, angebrachten Schwungmasse, geglättet werden, so dass sich eine annähernd lineare, von Oberwellen weitgehend freie Drehbewegung an der Ausgangswelle 3 ergibt. Zu diesem Zweck könnten an diesen Stellen auch Dämpfungselemente oder Federspeicher eingefügt sein.

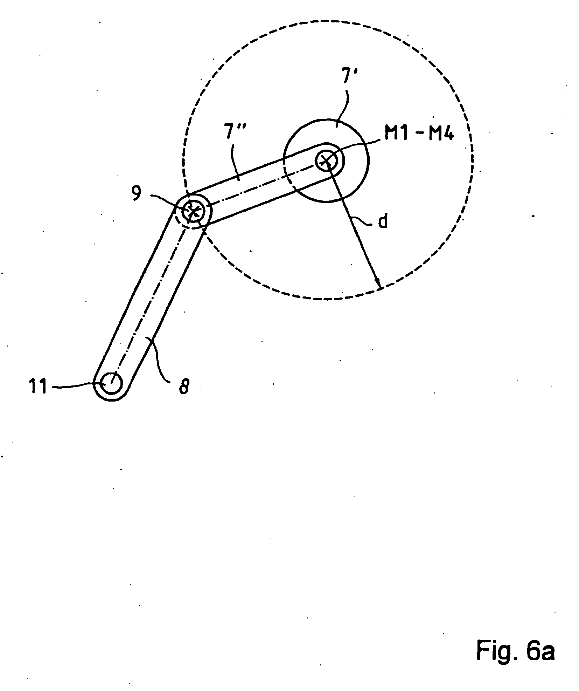

Bei einer zweiten, in Figur 6a dargestellten Ausführungsform sind die Transmissionsmodule jeweils als zu der Achse AA parallele Transmissionsstangen 7a' - 7d' mit kreiszylinderförmigem Querschnitt ausgebildet und mit je einem davon etwa radial abstehenden, um die betreffende Mittelpunktsachse M1 bis M4 drehbar gelagerten, weiteren Transmissionshebel 7a" - 7d" versehen. Die Radien r1 bis r4 der kreiszylinderförmigen Transmissionsstangen 7a' - 7d' sind deutlich reduziert im Vergleich gegenüber der zuvor genannten Ausbildung als Transmissionsscheiben 7a - 7d.

Jeweils ein erstes Ende der Transmissionshebel 7a" 7d" ist mit der kreiszylinderförmigen Transmissionsstange 7a' - 7d' drehfest verbunden und weist in einem Abstand d1 - d4 von der Mittelpunktsachse M1 bis M4 je eine Führungsöffnung 9a bis 9d auf. Über je einem in eine Führungsöffnung 9a bis 9d an dem zweiten Ende eingreifenden Stiftelement 9a - 9d ist mit jedem Transmissionshebel 7a" bis 7d" je ein weiterer Antriebshebel 8a - 8d drehbar verbunden, und zwar bildet jeweils einer der Antriebshebel 8a - 8d zusammen mit einem zugeordneten weiteren Transmissionshebel 7a" - 7d" einen "Kniegelenkhebel" aus.

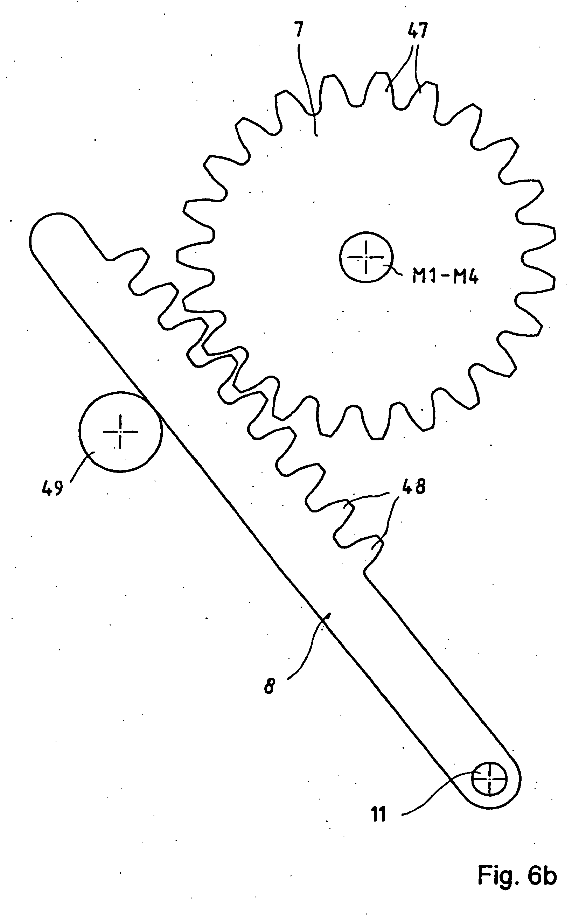

In einer dritten, in Figur 6b dargestellten Ausführungsform weist das als Transmissionsscheibe bzw. Transmissionszylinder ausgebildete Transmissionsmodul 7a - 7d zumindest in seinem von der Antriebsscheibe 5 in Richtung der Antriebshebel 8a - 8d abstehenden Umfangsabschnitt einen konzentrisch zu der jeweiligen Mittelachse M1 - M4 verlaufenden Zahnkranzabschnitt 47 auf, dessen Zähne senkrecht von der Mantelfläche der zylinderförmig ausgebildeten Transmissionsscheibe 7a - 7d abstehen. Jeweils einer der Antriebshebel 8a - 8d liegt tangential an der zugeordneten Transmissionsscheibe 7a - 7d an und weist jeweils in dem zu der Transmissionsscheibe 8a - 8d gerichteten Hebelabschnitt eine Zahnreihe 48 auf, deren Zähne zumindest teilweise in den die Transmissionsscheibe 7a - 7d konzentrisch umgebenden Zahnkränzabschnitt 47 eingreifen. Hierdurch wird eine Wirkverbindung zwischen dem jeweiligen Antriebshebel 8a - 8d und der diesem zugeordneten Transmissionsscheibe 7a - 7d ausgebildet. Um den ständigen Eingriff zwischen den Zähnen 47, 48 an den beiden Koppelmodulen 7a - 7d; 8a - 8d zu gewährleisten, ist jeder Antriebshebel 8a - 8d zusätzlich an dem zugeordneten Transmissionsmodul 7a - 7d geführt. Hierzu ist jeder Antriebshebel 8a - 8d mit je einer Haltevorrichtung versehen, die den Wirkverbund mit der gezahnten Transmissionsscheibe mit dem Radius d1 - d4 des Zahnkranzes sicherstellt. Ein Antriebshebel 8a - 8d kann dazu von einem Bügel 49 umgriffen werden, der um die betreffende Rotationsachse M1 - M4 verschwenkbar an dem betreffenden Transmissionsmodul 7a - 7d gelagert ist.

Der Radius des mit einer Verzahnung versehenen Umfangs eines Transmissionsmoduls 7a - 7d kann außerdem eine Funktion des Umfangswinkels sein, muß also nicht kreisrund bzw. konzentrisch zu der betreffenden Achse M1 - M4 sein, kann beispielsweise einem sinusförmigen Verlauf folgen. Auch die verzahnte Kante eines Antriebshebels 8a - 8d kann einen gekrümmten Verlauf aufweisen, so dass sich vielfältige Übertragungsfunktionen realisieren lassen.

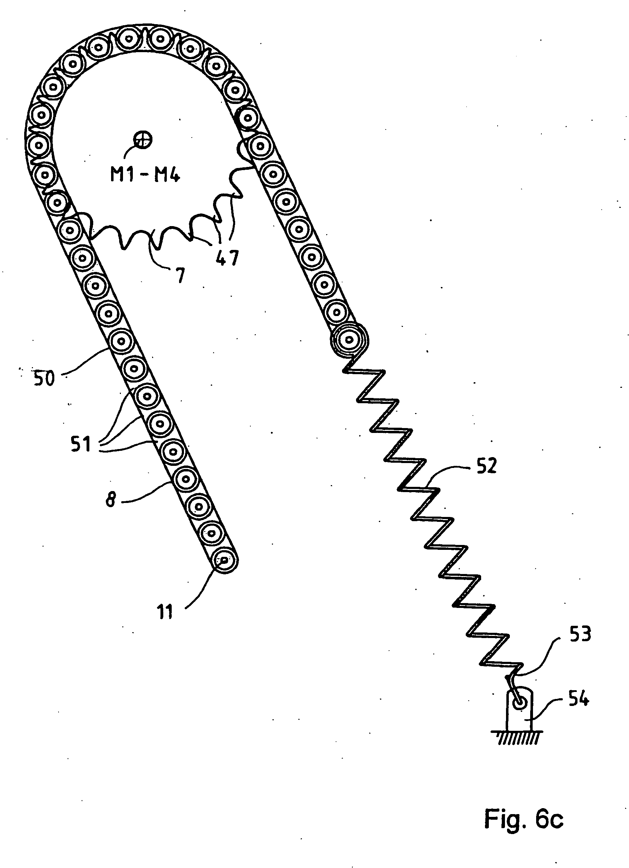

Die Ausführungsform einer Koppelmechanik nach Fig. 6c unterscheidet sich von der aus Fig. 6b vor allem dadurch, dass anstelle eines mit Zähnen 48 versehenen Antriebshebels 8 eine Kette 50 verwendet wird, deren einzelne, gelenkig miteinander verbundene Glieder 51 in die Verzahnung 47 des betreffenden Transmissionsmoduls 7a - 7d eingreifen. Das äußerste Glied 51 an einem Ende ist im Bereich des Lagersternpunktes M festgelegt, das andere Endglied 51 wird dagegen von einer Zugfeder 52 unter Spannung gehalten, deren anderes Ende 53 ebenfalls in der Nähe des Lagersternpunktes 11 verankert ist 54, und zwar um diesen drehbar. Die Kette 50 umschlingt das Kettenrad 7 auf einem Winkel von etwa 180°. Verändert sich der Abstand der Kettenradlagerung M1 - M4 gegenüber der Lagersternpunkt 11, so verkürzt oder streckt sich die Feder 52, das Kettenrad 7 rollt dabei entlang der Kette 8 ab und versetzt dieses in eine oszillierende Drehbewegung um seinen Mittelpunkt M1 - M4, die über die angeschlossenen Freiläufe 16a - 16d zyklisch an den Abtrieb 3 weitergegeben wird.

Im Rahmen einer anderen Ausführungsform kann zur drehbaren Lagerung der Antriebshebel 8a - 8d um die Führungswelle 12 jeweils ein weiterer Freilauf eingesetzt werden, vorzugsweise mit jeweils entgegengesetzter Sperr-Richtung. Über diese weiteren Freiläufe kann dann die durch die Antriebshebel 8a - 8d erzeugte Gegendrehbewegung abgegriffen werden und ebenfalls getriebetechnisch weiterverwendet werden. Beispielsweise kann die hiermit abgegriffene Gegendrehbewegung aufgrund Ihrer exakten Gegenläufigkeit zur Ausbildung einer "Notbremsfunktion" des stufenlosen Getriebes 1 eingesetzt werden.

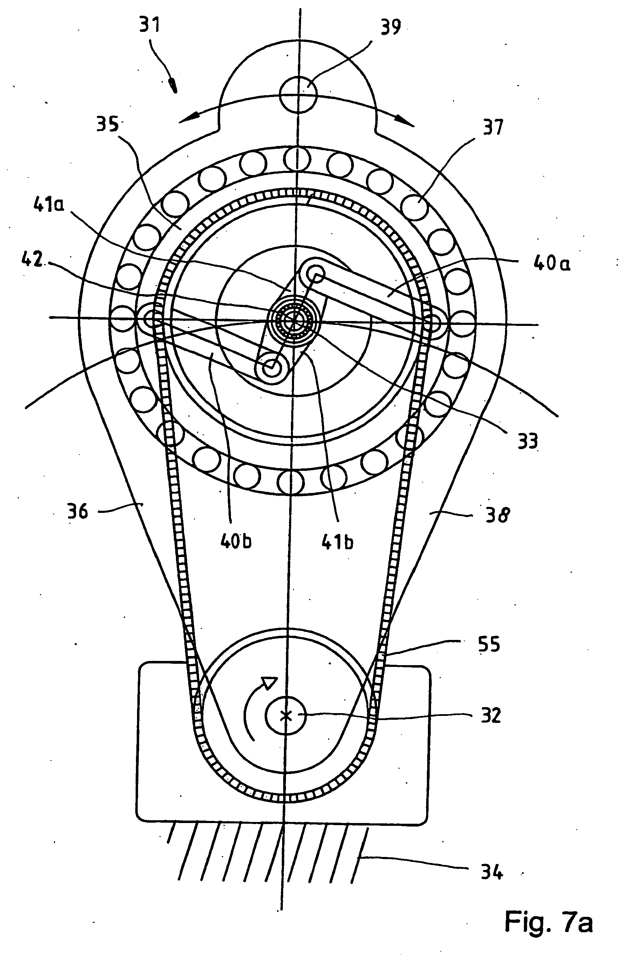

Ein ähnliches Prinzip ist bei einem anderen, in den Fig. 7a bis 7c wiedergegebenen Getriebe 31 verwirklicht, das ebenfalls zur Übersetzung der Drehzahl einer Antriebswelle 32 in eine variable Drehzahl der Abtriebswelle 33 dient. Zu diesem Zweck ist an einem Chassis 34, das vorzugsweise mit einem Gehäuse versehen, verbunden oder kombiniert ist, ein Führungs- oder Antriebsmodul, vorzugsweise in Form einer mit der Antriebswelle 32 gekoppelten, hohlen Trommel 35, drehbar gelagert. Die Kopplung zwischen Antriebswelle 32 und Antriebstrommel 35 kann bevorzugt mit einer endlosen Kette 55 bewirkt werden, evtl. aber auch mittels miteinander kämmender Zahnräder.

Die Antriebstrommel 35 ist, vorzugsweise jeweils im Bereich ihrer Stirnseiten, in einer Lunette 36 gelagert, bspw. mittels eines oder mehrerer Wälzlagerdrehverbindungen 37. Die Lunette 36 ist an dem Chassis 34 um eine Achse verschwenkbar gelagert, vorzugsweise um die Antriebswelle 32 oder eine zu dieser konzentrische Achse. Zur Erhöhung ihrer Stabilität kann die Lunette 36 aus zwei vorzugsweise deckungsgleichen, zueinander parallelen Platten bestehen 38, die durch einen Steg, vorzugsweise entlang eines Teils ihres Umfangs, miteinander verbunden sind. Eine Platte 38 hat vorzugsweise eine längliche Gestalt mit einem dickeren Ende, worin die Antriebsscheibe 5 gelagert ist, und mit einem dünneren Ende, womit die Lunette 36 an der Antriebswelle 32 gelagert ist. An ihrem Umfang, vorzugsweise im Bereich ihres dickeren Endes, ist ein Auge 39 vorgesehen, woran bspw. ein Hydraulikzylinder angreifen kann, umdie Lunette 36 gegenüber dem Chassis 34 und dem Gehäuse zu verstellen.

Mehrere, im dargestellten Beispiel zwei Koppelmechanismen dienen zur verstellbaren Übertragung einer Drehbewegung auf die Ausgangswelle 33. Jede Koppelmechanik besteht aus einer Kniehebelkonstruktion mit einem Antriebshebel 40a - 40b und einem damit gelenkig verbundenen Transmissionshebel 41a - 41b. Dabei verläuft die Achse des "Kniegelenks" parallel zu der Rotationsachse der Antriebstrommel 35. Die freien Enden der Antriebshebel 40a - 40b sind an der Innenseite der Antriebstrommel 35 exzentrisch zu ihrer Rotationsachse angelenkt, vorzugsweise diametral zueinander bzw. äquidistant über den Trommelumfang verteilt. Die freien Enden der Transmissionshebel 41a - 41b sind an einem Sternpunkt 42 zusammengeführt und dort konzentrisch zueinander gelagert oder geführt, bspw. direkt an der Ausgangswelle 33 oder einer damit konzentrischen Welle. Das innenliegende Ende jedes Transmissionshebels 41a - 41b ist außerdem über je einen Freilauf mit einem gemeinsamen Drehteil gekoppelt. Diese Freiläufe sind vorzugsweise in Richtung der Abtriebswelle 33 gegen- bzw. hintereinander versetzt.

Die Drehbewegungen dieser Freiläufe können entweder über deren Innenringe auf eine gemeinsamen Welle übertragen werden, oder sie sind über ineinandergesteckte Hülsen od. dgl. mit je einem Transmissionshebel 41a - 41b drehfest gekoppelt, und ihre Drehbewegungen werden sodann an einem gemeinsamen Hohlrad überlagert. Überlagerungswelle oder -hohlrad sind vorzugsweise koaxial zu der Ausgangswelle 33, aber über ein Differential davon getrennt. Dem dritten Anschluß dieses Differentials wird die Antriebsdrehzahl zugeleitet, vorzugsweise derart, dass die Ausgangsdrehzahl der Differenz der überlagerten Freilaufdrehzahlen minus der Eingangsdrehzahl entspricht.

Bei der Getriebeeinstellung nach Fig. 7a rotieren beide Koppelmechanismen ohne Relativbewegung synchron zueinander um die Achse 33 - die Eingänge des ausgangsseitigen Differentials erfahren gleich große, jedoch entgegengesetzte Drehzahlen.

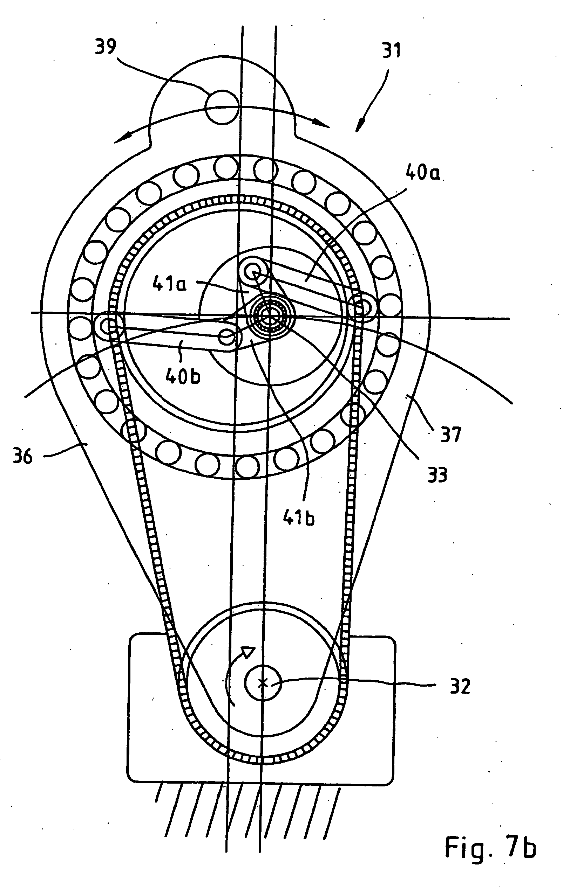

Bei der Getriebestellung nach Fig. 7b wird den Koppelmechanismen durch die Exzentrizität zwischen Antriebstrommel 35 und Abtriebswelle 33 eine beständige Relativbewegung aufgezwungen, vergleichbar dem Beugen und Strecken eines Kniegelenks. Dabei ist stets die Drehbewegung eines Transmissionshebels 41 a, 41 b schneller als die des anderen, weil stets einer in Drehrichtung der Trommel 35 verschwenkt wird, der andere jedoch entgegengesetzt, also entgegen der Trommeldrehrichtung. Der schnellere treibt über seinen Freilauf und über das Differential die Ausgangswelle 33 zusätzlich an. Bei einer Herausfilterung der Trommelbewegung an dem Differential verbleibt demnach die zusätzliche Drehzahl des jeweils voreilenden Transmissionshebels 41a, 41b an der Ausgangswelle 33 spürbar.

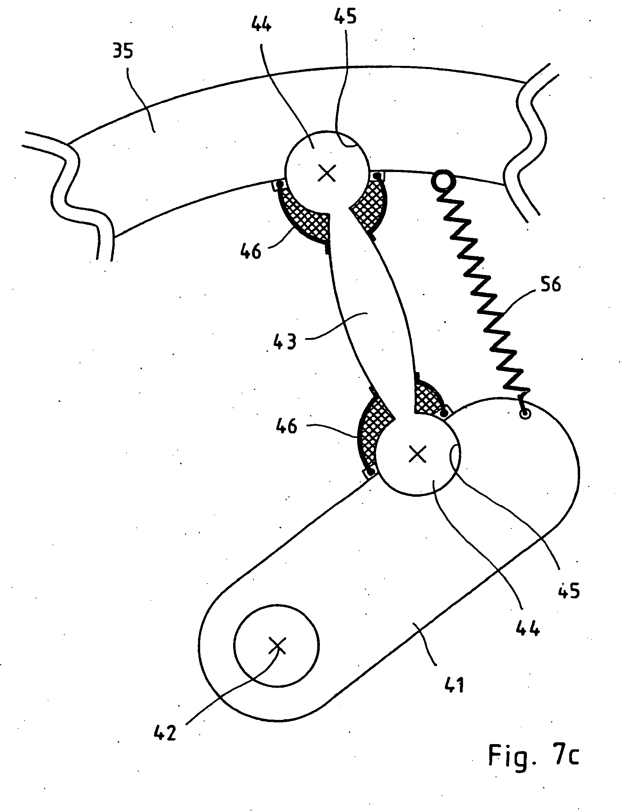

In Fig. 7c ist eine weitere Ausführungsform einer Koppelmechanik für das Getriebe 31 aus Fig. 7a und 7b dargestellt. Man erkennt schematisch einen Abschnitt der Antriebstrommel 35 sowie den Lagersternpunkt 42, woran wie bei der Ausführungsform gemäß Fig. 7a ein Transmissionshebel 41a gelagert ist. Anstelle über einen daran angelenkten Antriebshebel 40a ist der Transmissionshebel 41a dagegen über einen Stößel 43 mit der Antriebstrommel 35 gekoppelt. Während ein Stößel 43 an seinen beiden Enden je einen Kugelkopf 44 aufweist, sind an den Transmissionshebeln 41a und an der Innenseite der Antriebstrommel 35 dazu komplementäre Gelenkpfannen 45 vorgesehen, so dass sich jeweils die Funktion eines Kugelgelenks ergibt. Dies hat mehrere Vorteile: Einerseits lassen sich mit Kugeln weitaus größere Drücke übertragen als mit Gelenken; ferner kann durch die Kugeln 44 umgebende Manschetten 46 ein Schmiermittel an den Gelenkstellen 45 gehalten werden, so dass zur Schmierung nicht der gesamte Getriebehohlraum mit Schmierfett oder einem anderen Schmiermittel gefüllt sein muß; schließlich erlauben solche Kugelgelenkverbindungen auch eine schräge Ausrichtung der Stößel 43, so dass dieselben bspw. entlang einer gemeinsamen Umfangslinie der Trommel 35 angelenkt sein können, wodurch sich die Baugröße des Getriebes 35 evtl. weiter verringern läßt. Damit beim Rücklaufen des (nicht antreibenden) Transmissionshebels 41a, 41b der Kontakt zwischen Stößel 43a, 43b und Transmissionshebel 41a, 41b bzw. zwischen Stößel 43a, 43b und der Antriebstrommel 35 nicht abreißt, ist jeder Transmissionshebel 41a, 41b über je eine Zugfeder 56 am Umfang der Antriebstrommel 35 angekoppelt. Zu diesem Zweck könnte auch jeweils ein Halteteller oder ein Lochelement vorgesehen sein mit einem Loch, dessen Durchmesser kleiner ist als die betreffende Kugel 44, und der an dem gegenüberliegenden Anschlußteil 35, 41a, 41b festgelegt ist, bspw. angeschraubt.

Die Erfindung wurde voranstehend an einem Ausführungsbeispiel erläutert. Es versteht sich, dass zahlreiche Änderungen sowie Abwandlungen möglich sind, ohne dass dadurch der der Erfindung zugrunde liegende Erfindungsgedanke verlassen wird. Und zwar ist neben einer zentralen Lagerung der Getriebefunktionskomponenten, d.h. der beschriebenen Lagerung der Antriebsscheibe(n) 5, 5' und des Differentialgetriebemoduls 20 über eine rotationssymmetrische Zentralachse AA gegenüber dem Gehäuse, bei dem die Koppelmechanik gegenüberliegend am Gehäuse befestigt ist und das Differentialgetriebe im Wirkverbund mit dem Wendegetriebe dezentral angeordnet ist, alternativ eine dezentrale Lagerung denkbar, beispielsweise um die Zahnräder des Differentialgetriebemoduls bzw. um die verzahnte Antriebsscheibe(n) 5, 5' mittels Rollen oder Zahnräder zum drehbaren Halten der Getriebekomponenten.

Wird der Abtrieb schneller als die der Übersetzung zugrunde gelegte Verbindung zur Antriebsscheibe/Antrieb, so findet keine Traktion mehr statt. Ist eine Realisierung der Traktion im Schiebebetrieb gewünscht, so erfordert dies den zusätzlichen Einsatz von Umschalteinrichtungen, die die Antriebswelle mit der Abtriebswelle vertauschen. Alternativ hierzu ist auch der Einsatz einer Retarderbremse oder eines Generators zum Aufladen eines Akkus geeignet.

## Patentansprüche

1. Stufenloses Getriebe (1;31) zur Übertragung einer relativen Drehbewegung zwischen wenigstens einem ersten, vorzugsweise angetriebenen Drehteil, insbesondere einer Antriebswelle (2;32), einem Antriebsring oder -zylinder, und einem Chassis (4;34) oder Gehäuse auf wenigstens ein zweites, vorzugsweise abtreibendes Drehteil, bspw. eine Abtriebswelle (3;33), einen Abtriebsring oder -zylinder, wobei
a) das erste Drehteil (2;32) oder das Chassis (4;34) oder Gehäuse direkt oder indirekt mit einem ersten Führungs- oder Antriebsmodul (5,5';35) gekoppelt ist;
b) ein zweites Führungsmodul, insbesondere ein Führungshebel (14) oder ein Lagerungselement, vorgesehen ist;
c) die beiden Führungs- oder Antriebsmodule (5,5',14;35) derart mit einem Chassis (4;34) oder Gehäuse des Getriebes (1;31) oder eines angeschlossenen Maschinen- oder Anlagenteils verbunden, insbesondere daran dreh- oder schwenkbar gelagert oder geführt oder befestigt sind, dass das zweite Führungsmodul (14), gegenüber dem ersten Führungs- oder Antriebsmodul (5, 5';35) verstellbar ist;
d) die beiden Führungs- oder Antriebsmodule (5,5',14;35) durch wenigstens zwei Mechanismen miteinander gekoppelt sind, bestehend aus jeweils einem ersten Koppelmodul (7a-7d) und je einem zweiten Koppelmodul (8a-8d), welche aneinander gelagert (9a-9d) oder geführt sind und/oder miteinander kämmen;
e) und wobei je ein erstes Koppelmodul (7a-7d) jeder Koppelmechanik mit dem ersten Führungs- oder Antriebsmodul (5,5';35) gekoppelt ist, drehbar um je eine von mehreren, zu dessen Rotationsgerade parallele, aber exzentrische Rotationsachsen (M1,M2,M3,M4) oder festgelegt an je einem von mehreren, zu dessen Rotationsgerade exzentrischen Befestigungspunkten;
f) während das jeweils andere Koppelmodul (8a-8d) jeder Koppelmechanik mit dem zweiten Führungsmodul oder -hebel (14) gekoppelt ist, unabhängig von den betreffenden Koppelmodulen (8a-8d) der übrigen Koppelmechaniken, um eine für alle angeschlossenen Koppelmodule (8a-8d) gemeinsamen Achse (11) drehbar gelagert, wobei die gemeinsame Achse (11) während des Betriebs nicht exzentrisch umläuft;
g) und wobei ein erstes und/oder zweites Koppelmodul (7a-7d; 8a-8d) jeder Koppelmechanik an je einer Rotations- oder Drehachse (M1, M2, M3, M4; 3) gelagert ist, deren Abstand zu dem Dreh- oder Berührungs- oder Eingriffspunkt oder -bereich mit dem zugeordneten, anderen Koppelmodul (7a-7d; 8a-8d) einen vorgegebenen Radius (d1-d4) aufweist;
h) wobei ferner je ein erstes oder zweites Koppelmodul (7a-7d; 8a-8d) jeder Koppelmechanik mit zumindest einem ersten Dreh-Anschluß eines Freilaufs (16a-16d) direkt verbunden oder indirekt gekoppelt ist, dessen jeweils anderer Dreh-Anschluß direkt oder indirekt mit einem zweiten Drehteil (18) gekoppelt ist, derart, dass eine Transportbewegung des Auslenkungswinkels (ù) der Drehbewegung des betreffenden ersten oder zweiten Koppelmoduls (7a-7d, 8a-8d) zyklisch auf ein weiteres Drehteil (18) übertragen wird, und wobei die Drehachsen der Drehanschlüsse eines Freilaufs (16a-16d) miteinander fluchten;
i) und wobei schließlich das weitere Drehteil (18) sowie das erste und zweite Drehteil (2,3;32,33) an jeweils unterschiedliche Anschlüsse (19,23,25) eines Differentialgetriebemoduls (20) gekoppelt sind.

2. Stufenloses Getriebe nach Anspruch 1, **dadurch gekennzeichnet, dass** ein erstes internes Führungsteil (5,5';35) um eine Rotationsachse (AA) gegenüber dem Getriebechassis oder -gehäuse drehbar gelagert ist, wobei das erste interne Führungsteil (5,5';35) drehfest mit einer An- oder Abtriebswelle (2,3;32,33) gekoppelt ist.

3. Stufenloses Getriebe nach einem der Ansprüche 1 bis 2, **dadurch gekennzeichnet, dass** ein erstes internes Führungsteil (5,5';35) wenigstens einen Abschnitt von der Gestalt einer Scheibe aufweist, deren Grundebene von der Rotationsgeraden (AA) etwa lotrecht durchsetzt wird, und/oder wobei ein erstes internes Führungsteil (5,5';35) wenigstens zwei scheibenförmige, zueinander parallele Abschnitte aufweist.

4. Stufenloses Getriebe nach einem der vorhergehenden Ansprüche, **dadurch gekennzeichnet, dass** das zweite interne Führungsteil (11,12,14) gegenüber dem Getriebechassis (4;34) oder Gehäuse und/oder gegenüber der Rotationsachse (AA) des ersten internen Führungsteils (5,5';35) verstellbar, insbesondere verschiebbar ist.

5. Stufenloses Getriebe nach einem der vorhergehenden Ansprüche, **dadurch gekennzeichnet, dass** zwei Koppelmodule (7a-7d; 8a-8d) einer Koppelmechanik derart aneinander geführt und/oder beweglich miteinander verbunden sind (9a-9d), dass eine Veränderung des Abstandes zwischen der betreffenden Rotationsachse (M1,M2,M3,M4) an dem ersten Führungsteil (5,5';35) und dem Anlenkpunkt an dem zweiten Führungsteil (11,12,14) eine Relativverdrehung wenigstens eines Koppelmoduls (7a-7d; 8a-8d) um dessen Anlenk- oder Rotationsachse (M1,M2,M3,M4) zur Folge hat.

6. Stufenloses Getriebe nach einem der vorhergehenden Ansprüche, **dadurch gekennzeichnet, dass** je ein mit dem ersten internen Führungsteil (5,5') gekoppeltes Koppelmodul (7a-7d) jeder Koppelmechanik wenigstens einen scheibenförmigen Abschnitt dieses Führungsteils (5,5') exzentrisch zu dessen Rotationsachse (AA) durchsetzt, wobei vorzugsweise je ein mit dem ersten internen Führungsteil (5,5') gekoppeltes Koppelmodul (7a-7d) jeder Koppelmechanik als Transmissionsmodul (7a-7d) ausgebildet ist, das in wenigstens einem scheibenförmigen Abschnitt dieses Führungsteils (5,5') exzentrische zu dessen Rotationsachse (AA) um eine eigene Rotationsachse (M1,M2,M3,M4) drehbar gelagert ist.

7. Stufenloses Getriebe nach einem der vorhergehenden Ansprüche, **dadurch gekennzeichnet, dass** ein mit dem zweiten Führungsteil (11,12,14) gekoppeltes Koppelmodul (8a-8d) die Gestalt eines Hebels aufweist, wobei vorzugsweise je ein Koppelmodul (8a-8d) jeder Koppelmechanik als Hebel (8a-8d) ausgebildet ist, wobei die Hebel (8a-8d) jeder Koppelmechanik unabhängig voneinander drehbar um die Rotationsachse einer rotationssymmetrischen Führungsfläche des ersten Führungsteils (11,12,14) gelagert sind.

8. Stufenloses Getriebe nach einem der vorhergehenden Ansprüche, **dadurch gekennzeichnet, dass** an jedem mit dem ersten internen Führungsteil (5,5';35) gekoppelten Koppelmodul (7a-7d), insbesondere Transmissionsmodul (7a-7d), exzentrisch zu dessen Rotationsachse (M1,M2,M3,M4) eine Fläche zur Kopplung mit dem jeweils anderen Koppelmodul (8a-8d), insbesondere Hebel (8a-8d) vorgesehen ist, die parallel zu der Rotationsachse (M1,M2,M3,M4) verläuft.

9. Stufenloses Getriebe nach einem der vorhergehenden Ansprüche, **dadurch gekennzeichnet, dass** die Fläche eines Koppelmoduls (7a-7d;8a-8d) zur Kopplung mit dem jeweils anderen Koppelmodul (7a-7d;8a-8d), als Zahnreihe oder Reibfläche ausgebildet ist.

10. Stufenloses Getriebe nach einem der vorhergehenden Ansprüche, **dadurch gekennzeichnet, dass** ein Koppelmodul (7a-7d;8a-8d) als Kette, insbesondere als Gliederkette ausgebildet ist.

11. Stufenloses Getriebe nach Anspruch 9 oder 10, **dadurch gekennzeichnet, dass** ein Koppelmodul (7a-7d) zum Eingriff in die Zahnreihe des jeweils zugeordneten Koppelmoduls (8a-8d) ausgebildet ist, wobei vorzugsweise ein Koppelmodul (7a-7d) zum Eingriff in die Zahnreihe des jeweils zugeordneten Koppelmoduls (8a-8d) als Zahnrad ausgebildet ist.

12. Stufenloses Getriebe nach einem der vorhergehenden Ansprüche, **dadurch gekennzeichnet, dass** je ein Freilauf an je einem Koppelmodul (7a-7d;8a-8d) jeder Koppelmechanik angeordnet ist, wobei die Drehbewegungen der an ein gemeinsames Führungselement (11,12,14;5,5';35) gekoppelten Koppelmodule (7a-7d;8a-8d) aller Koppelmechaniken jenseits der angeschlossenen Freiläufe (16a-16d) zusammengefaßt sind, und wobei sämtliche Freiläufe (16a-16d) derart orientiert sind, dass stets die in einer gemeinsam orientierten Drehrichtung schnellste Drehbewegung weitergegeben wird.

13. Verfahren zum Betrieb eines stufenlosen Getriebes (1;31) mit wenigstens einem ersten Drehteil, insbesondere einer Antriebswelle (2;32), -ring oder - zylinder, einem Chassis (4;34) oder Gehäuse und wenigstens einem zweiten Drehteil, insbesondere eine Abtriebswelle (3;33), einen Antriebsring oder -zylinder, wobei
a) das erste Drehteil (2;32) oder das Chassis (4;34) oder Gehäuse direkt oder indirekt mit einem ersten Führungs- oder Antriebsmodul (5,5';35) gekoppelt ist;
b) ein zweites Führungsmodul, insbesondere ein Führungshebel (14) oder ein Lagerungselement, vorgesehen ist;
c) die beiden Führungs- oder Antriebsmodule (5,5';14) derart mit einem Chassis (4;34) oder Gehäuse des Getriebes (1;31) oder eines angeschlossenen Maschinen- oder Anlagenteils verbunden, insbesondere daran dreh- oder schwenkbar gelagert oder geführt oder befestigt sind, dass das zweite Führungsmodul (14), gegenüber dem ersten Führungs- oder Antriebsmodul (5, 5';35) verstellbar ist;
d) die beiden Führungs- oder Antriebsmodule (5,5';14;35) durch wenigstens zwei Mechanismen miteinander gekoppelt sind, bestehend aus jeweils einem ersten Koppelmodul (7a-7d) und je einem zweiten Koppelmodul (8a-8d), welche aneinander gelagert (9a-9d) oder geführt sind und/oder miteinander kämmen;
e) und wobei je ein erstes Koppelmodul (7a-7d) jeder Koppelmechanik mit dem ersten Führungs- oder Antriebsmodul (5,5';35) gekoppelt ist, drehbar um je eine von mehreren, zu dessen Rotationsgerade parallele, aber exzentrische Rotationsachsen (M1,M2,M3,M4) oder festgelegt an je einem von mehreren, zu dessen Rotationsgerade exzentrischen Befestigungspunkten;
f) während das jeweils andere Koppelmodul (8a-8d) jeder Koppelmechanik mit dem zweiten Führungsmodul oder -hebel (14) gekoppelt ist, unabhängig von den betreffenden Koppelmodulen (8a-8d) der übrigen Koppelmechaniken, um eine für alle angeschlossenen Koppelmodule (8a-8d) gemeinsamen Achse (11) drehbar gelagert, wobei die gemeinsame Achse (11) während des Betriebs nicht exzentrisch umläuft;
g) und wobei ein erstes und/oder zweites Koppelmodul (7a-7d;8a-8d) jeder Koppelmechanik an je einer Rotations- oder Drehachse (M1,M2,M3,M4;11) gelagert ist, deren Abstand zu dem Dreh- oder Berührungs- oder Eingriffspunkt oder -bereich mit dem zugeordneten, anderen Koppelmodul (7a-7d;8a-8d) einen vorgegebenen Radius (d1-d4) aufweist;
h) wobei ferner je ein erstes oder zweites Koppelmodul (7a-7d;8a-8d) jeder Koppelmechanik mit zumindest einem ersten Dreh-Anschluß eines Freilaufs (16a-16d) direkt verbunden oder indirekt gekoppelt ist, dessen jeweils anderer Dreh-Anschluß direkt oder indirekt mit einem zweiten Drehteil (18) gekoppelt ist, derart, dass eine Transportbewegung des Auslenkungswinkels (ù) der Drehbewegung des betreffenden ersten oder zweiten Koppelmoduls (7a-7d,8a-8d) zyklisch auf ein weiteres Drehteil (18) übertragen wird, und wobei die Drehachsen der Drehanschlüsse eines Freilaufs (16a-16d) miteinander fluchten;
i) und wobei schließlich das weitere Drehteil (18) sowie das erste und zweite Drehteil (2,3;32,33) an jeweils unterschiedliche Anschlüsse (19,23,25) eines Differentialgetriebemoduls (20) gekoppelt sind;
**dadurch gekennzeichnet, dass** die Veränderung des Abstandes zwischen der Rotationsachse (M1,M2,M3,M4) an dem ersten Führungsteil (5,5';35) und dem Anlenkpunkt an dem zweiten Führungsteil (11,12,14) während eines Umlaufs der Führungsteile (11,12,14;5,5';35) umeinander bzw. um die exzentrische Drehachse eine Relativverdrehung wenigstens eines Koppelmoduls (7a-7d;8a-8d), insbesondere Transmissionsmoduls (7a-7d) um dessen Anlenk- oder Rotationsachse (M1,M2,M3,M4) zur Folge hat.

14. Verfahren nach Anspruch 13, **dadurch gekennzeichnet, dass** zur Variation des Übersetzungsverhältnisses ein zweites Führungsteil (11,12,14), insbesondere der Lagersternpunkt (11), aus einer Grundstellung ausgelenkt wird, wodurch die Amplitude der Rotationsbewegung, welche die Transmissionsmodule (7a-7d) über die Antriebshebel (8a-81d) erfahren, verändert wird.

15. Verfahren nach einem der Ansprüche 13 oder 14, **dadurch gekennzeichnet, dass** in einer Grundstellung das Übersetzungsverhältnis des Getriebes (1;31) gleich null ist oder ein mittels eines Wendegetriebes (21) voreingestelltes Übersetzungsverhältnis vorliegt.

## Claims

1. Continuously variable transmission (1;31) to transfer a relative rotary motion between at least one first, preferably driven rotary part, in particular a drive shaft (2;32), a drive ring or cylinder, and a chassis (4;34) or housing on at least a second, preferably driving rotary part, for example an output shaft (3;33), an output ring or cylinder,
a) the first rotary part (2;32) or the chassis (4;34) or housing being directly or indirectly coupled with a first guide or drive module (5,5';35);
b) a second guide module, particularly a guide lever (14) or a mounting element being provided;
c) the two guide or drive modules (5,5',14;35) being connected with a chassis (4;34) or housing of the transmission (1 ;31) or of an adjacent machine or installation part, especially rotatably or swivelably mounted or guided on it, such that the second guide module (14) can be displaced with respect to the first guide or drive module (5, 5';35);
d) the two guide or drive modules (5,5',14;35) being coupled with one another by means of at least two mechanisms, each consisting of a first coupling module (7a-7d) and a second coupling module (8a-8d), which are mounted (9a-9d) or guided on one another and/or mesh with one another;
e) and the first coupling module (7a-7d) of each coupling mechanism being coupled with the first guide or drive module (5,5';35), such that it can rotate around one of several rotational axes (M1,M2,M3,M4) which are parallel to its rotational straight line but excentric or fixed to one of several fastening points which are excentric to its rotational straight line;
f) while the other coupling module (8a-8d) of each coupling mechanism is coupled with the second guide module or lever (14), independent of the relevant coupling modules (8a-8d) of the remaining coupling mechanisms, mounted such that it can rotate around an axis (11) common to all connected coupling modules (8a-8d), the common axis (11) not revolving excentrically during operation;
g) and a first and/or second coupling module (7a-7d; 8a-8d) of each coupling mechanism being mounted on a rotational or swivel axis (M1, M2, M3, M4; 3), whose distance from the point of rotation or contact or engagement or area with the associated, other coupling module (7a-7d; 8a-8d) exhibits a specified radius (d1-d4);
h) furthermore, a first or second coupling module (7a-7d; 8a-8d) of each coupling mechanism being directly connected or indirectly coupled with at least a first rotary connection of a freewheel (16a-16d), whose other rotary connection is directly or indirectly coupled with a second rotary part (18), such that a transport movement of the deflection angle (ù) of the rotary movement of the relevant first or second coupling module (7a-7d, 8a-8d) is cyclically transferred to a further rotary part (18), and the rotary axes of the rotary connections of a freewheel (16a-16d) being aligned with one another;
i) and finally the further rotary part (18) and the first and second rotary parts (2,3;32,33) being coupled each to different connections (19,23,25) of a differential transmission module (20).

2. Continuously variable transmission according to Claim 1, **characterized in that** a first internal guide part (5,5';35) is mounted such that it can rotate around a rotational axis (AA) with respect to the transmission chassis or housing, whereby the first internal guide part (5,5';35) is coupled in a rotationally fixed manner with a drive or output shaft (2,3;32,33).

3. Continuously variable transmission according to one of the Claims 1 to 2, **characterized in that** a first internal guide part (5,5';35) exhibits at least one segment of the shape of a disk, whose base plane is crossed by the rotational straight lines (AA) approximately perpendicularly, and/or whereby a first internal guide part (5,5';35) exhibits at least two disk-shaped segments that are parallel to one another.

4. Continuously variable transmission according to one of the preceding claims, **characterized in that** the second internal guide part (11,12,14) is adjustable and in particular displaceable with respect to the transmission chassis (4;34) or housing and/or with respect to the rotational axis (AA) of the first internal guide part (5,5';35).

5. Continuously variable transmission according to one of the preceding claims, **characterized in that** two coupling modules (7a-7d; 8a-8d) of a coupling mechanism are guided with one another and/or movably joined with one another (9a-9d) such that a change in the distance between the relevant rotational axes (M1,M2,M3,M4) at the first guide part (5,5';35) and the pivot point at the second guide part (11,12,14) causes a relative twisting of at least one coupling module (7a-7d; 8a-8d) around its pivot or rotational axis (M1,M2,M3,M4).

6. Continuously variable transmission according to one of the preceding claims, **characterized in that** a coupling module (7a-7d) of each coupling mechanism coupled with the first internal guide part (5,5') crosses at least one disk-shaped segments of this guide part (5,5') excentrically to its rotational axis (AA), whereby preferably a coupling module (7a-7d) of each coupling mechanism coupled with the first internal guide part (5,5') is designed as a transmission module (7a-7d) which is mounted such that it can rotate around one of its own rotational axes (M1,M2,M3,M4) excentric to its rotational axis (AA) in at least one disk-shaped segment of this guide part (5,5').

7. Continuously variable transmission according to one of the preceding claims, **characterized in that** a coupling module (8a-8d) coupled with the second guide part (11,12,14) exhibits the form of a lever, whereby preferably one coupling module (8a-8d) of each coupling mechanism is designed as a lever (8a-8d), the levers (8a-8d) of each coupling mechanism being mounted such that they can rotate independently of one another around the rotational axis of a rotationally symmetrical guide surface of the first guide part (11,12,14).

8. Continuously variable transmission according to one of the preceding claims, **characterized in that** a surface, which runs parallel to the rotational axis (M1,M2,M3,M4), is provided for coupling with the other coupling module (8a-8d), lever (8a-8d) in particular, on each coupling module (7a-7d), transmission module (7a-7d) in particular, that is coupled with the first internal guide part (5,5';35), excentric to its rotational axis (M1,M2,M3,M4).

9. Continuously variable transmission according to one of the preceding claims, **characterized in that** the surface of a coupling module (7a-7d;8a-8d) for coupling with the other coupling module (7a-7d;8a-8d) is designed as a row or teeth or friction surface.

10. Continuously variable transmission according to one of the preceding claims, **characterized in that** a coupling module (7a-7d;8a-8d) is designed as a chain, particularly a link chain.

11. Continuously variable transmission according to Claim 9 or 10, **characterized in that** a coupling module (7a-7d) is designed to engage with the row of teeth of the associated coupling module (8a-8d), whereby preferably a coupling module (7a-7d) is designed to engage as a toothed gear with the row of teeth of the associated coupling module (8a-8d).

12. Continuously variable transmission according to one of the preceding claims, **characterized in that** a freewheel is arranged on each coupling module (7a-7d;8a-8d) of each coupling mechanism, whereby the rotary movements of the coupling modules (7a-7d;8a- 8d) coupled with a common guide element (11,12,14;5,5';35) are combined to all coupling mechanisms beyond the connected freewheels (16a- 16d), and whereby all freewheels (16a-16d) are oriented such that the fastest rotary movement in a shared orientation direction of rotation is transferred.

13. Method of operating a continuously variable transmission (1;31) with at least a first rotary part, in particular a drive shaft (2;32), a drive ring or cylinder, a chassis (4;34) or housing and at least a second rotary part, in particular an output shaft (3;33), an output ring or cylinder,
a) the first rotary part (2;32) or the chassis (4;34) or housing being directly or indirectly coupled with a first guide or drive module (5,5';35);
b) a second guide module, particularly a guide lever (14) or a mounting element being provided;
c) the two guide or drive modules (5,5'14) being connected with a chassis (4;34) or housing of the transmission (1;31) or of an adjacent machine or installation part, especially rotatably or swivelably mounted or guided on it, such that the second guide module (14) can be displaced with respect to the first guide or drive module (5,5';35);
d) the two guide or drive modules (5,5',14;35) being coupled with one another by means of at least two mechanisms, each consisting of a first coupling module (7a-7d) and a second coupling module (8a-8d), which are mounted (9a-9d) or guided on one another and/or mesh with one another;
e) and the first coupling module (7a-7d) of each coupling mechanism being coupled with the first guide or drive module (5,5';35), such that it can rotate around one of several rotational axes (M1,M2,M3,M4) which are parallel to its rotational straight line but excentric or fixed to one of several fastening points which are excentric to its rotational straight line;
f) while the other coupling module (8a-8d) of each coupling mechanism is coupled with the second guide module or lever (14), independent of the relevant coupling modules (8a-8d) of the remaining coupling mechanisms, mounted such that it can rotate around an axis (11) common to all connected coupling modules (8a-8d), the common axis (11) not revolving excentrically during operation;
g) and a first and/or second coupling module (7a-7d; 8a-8d) of each coupling mechanism being mounted on a rotational or swivel axis (M1,M2,M3,M4;11), whose distance from the point of rotation or contact or engagement or area with the associated, other coupling module (7a-7d; 8a-8d) exhibits a specified radius (d1-d4);
h) furthermore, a first or second coupling module (7a-7d; 8a-8d) of each coupling mechanism being directly connected or indirectly coupled with at least a first rotary connection of a freewheel (16a-16d), whose other rotary connection is directly or indirectly coupled with a second rotary part (18), such that a transport movement of the deflection angle (ù) of the rotary movement of the relevant first or second coupling module (7a-7d, 8a-8d) is cyclically transferred to a further rotary part (18), and the rotary axes of the rotary connections of a freewheel (16a-16d) being aligned with one another;
i) and finally the further rotary part (18) and the first and second rotary parts (2,3;32,33) being coupled each to different connections (19,23,25) of a differential transmission module (20);
**characterized in that** the change in the distance between the rotational axis (M1,M2,M3,M4) at the first guide part (5,5';35) and the pivot point at the second guide part (11,12,14) during a revolution of the guide parts (11,12,14;5,5';35) around one another or around the excentric rotary axis results in a relative twisting of at least one coupling module (7a-7d;8a-8d), in particular transmission module (7a-7d), around its pivot or rotational axis (M1,M2,M3,M4).

14. Method according to Claim 13, **characterized in that** a second guide part (11,12,14), in particular the bearing star point (11) is deflected from a base position in order to vary the gear ratio, with the result that the amplitude of the rotational movement which the transmission modules (7a-7d) undergo by means of the drive lever (8a-8d) changes.

15. Method according to one of the Claims 13 to 14, **characterized in that**, in a base position, the gear ratio of the transmission (1;31) equals zero, or a gear ratio is predefined by means of a reversing transmission (21).

## Revendications

1. Transmission à réglage continu (1 ; 31) destinée à transmettre un mouvement de rotation relatif entre au moins un premier élément de rotation de préférence entraîné, en particulier un arbre d'entraînement (2 ; 32), une bague ou un cylindre d'entraînement, et un châssis (4 ; 34) ou un carter sur au moins un deuxième élément de rotation, de préférence de sortie, par exemple un arbre de sortie (3 ; 33), une bague ou un cylindre de sortie, où
a) le premier élément de rotation (2 ; 32) ou le châssis (4 ; 34) ou le carter est couplé directement ou indirectement à un premier module de guidage ou d'entraînement (5, 5' ; 35);
b) un deuxième module de guidage, en particulier un levier de guidage (14) ou un élément de palier est prévu;
c) les deux modules de guidage ou d'entraînement (5, 5', 14 ; 35) sont reliés à un châssis (4 ; 34) ou un carter de la transmission (1 ; 31) ou un élément de machine ou d'installation raccordé, en particulier y sont montés à rotation libre ou à pivotement ou guidés ou fixés de façon telle que le deuxième module de guidage (14) est réglable par rapport au premier module de guidage ou d'entraînement (5, 5' ; 35);
d) les deux modules de guidage ou d'entraînement (5, 5', 14 ; 35) sont couplés entre eux par l'intermédiaire d'au moins deux mécanismes comprenant respectivement un premier module de couplage (7a - 7d) et un deuxième module de couplage (8a - 8d), lesquels sont montés l'un contre l'autre (9a - 9d) ou guidés et/ou s'engrènent;
e) et où respectivement un premier module de couplage (7a - 7d) de chaque mécanisme de couplage est couplé au premier module de guidage d'entraînement (5, 5' ; 35), pivotant respectivement autour d'un de plusieurs axes de rotation (M1, M2, M3, M4) parallèles mais excentriques par rapport à sa droite de rotation ou fixé respectivement à un de plusieurs points de fixation excentriques par rapport à sa droite de rotation;
f) tandis que respectivement l'autre module de couplage (8a - 8d) de chaque mécanisme de couplage est couplé au deuxième module ou levier guidage (14), indépendamment des modules de couplage concernés (8a - 8d) des autres mécanismes de couplage montés à rotation libre autour d'un axe commun (11) à tous les modules de couplage (8a - 8d) raccordés, l'axe commun (11) ne tournant pas excentriquement durant le fonctionnement;
g) et où un premier et/ou deuxième module de couplage (7a - 7d ; 8a - 8d) de chaque mécanisme de couplage est monté sur un axe de rotation ou de révolution (M1, M2, M3, M4 ; 3) dont la distance au point ou à la zone de rotation ou de contact ou d'engrènement avec l'autre module de couplage attribué (7a - 7d ; 8a - 8d) présente un rayon prédéfini (d1 - d4);
h) où par ailleurs respectivement un premier ou deuxième module de couplage (7a - 7d ; 8a - 8d) de chaque mécanisme de couplage est relié directement ou couplé indirectement à au moins un premier raccordement tournant d'une roue libre (16a - 16d) dont respectivement l'autre raccordement tournant est couplé directement ou indirectement à un deuxième élément de rotation (18) tel qu'un mouvement de transport de l'angle de déviation (ù) du mouvement de rotation du premier ou deuxième module de couplage (7a - 7d, 8a - 8d) concerné est transmis cycliquement à un autre élément de rotation (18), les axes de rotation des raccordements tournants d'une roue libre (16a - 16d) étant alignés les uns avec les autres;
i) et où finalement l'autre élément de rotation (18) ainsi que le premier et le deuxième élément de rotation (2, 3 ; 32, 33) sont couplés respectivement à différents raccordements (19, 23, 25) d'un module de différentiel (20).

2. Transmission à réglage continu selon la revendication 1, **caractérisée en ce qu'**un premier élément de guidage interne (5, 5' ; 35) est monté à rotation libre autour d'un axe de rotation (AA) par rapport au châssis ou carter de transmission, le premier élément de guidage interne (5, 5' ; 35) étant couplé bloqué en rotation à un arbre d'entraînement ou de sortie (2, 3 ; 32, 33).

3. Transmission à réglage continu selon l'une des revendications 1 à 2, **caractérisée en ce qu'**un premier élément de guidage interne (5, 5' ; 35) présente au moins un segment en forme de disque dont le plan de base est traversé approximativement à la verticale par la droite de rotation (AA), et/ou un premier élément de guidage interne (5, 5' ; 35) présente au moins deux segments en forme de disque, parallèles les uns par rapport aux autres.

4. Transmission à réglage continu selon l'une des revendications précédentes, **caractérisée en ce que** le deuxième élément de guidage interne (11, 12, 14) peut être réglé, en particulier déplacé, par rapport au châssis du mécanisme de transmission (4 ; 34) ou au carter et/ou par rapport à l'axe de rotation (AA) du premier élément de guidage interne (5, 5' ; 35).

5. Transmission à réglage continu selon l'une des revendications précédentes, **caractérisée en ce que** deux modules de couplage (7a - 7d ; 8a - 8d) d'un mécanisme de couplage sont amenés l'un contre l'autre et/ou reliés entre eux de manière mobile (9a - 9d) de telle façon qu'une variation de la distance entre l'axe de rotation concerné (M1, M2, M3, M4) au niveau du premier élément de guidage (5, 5'; 35) et le point d'articulation au niveau du deuxième élément de guidage (11, 12, 14) engendre une rotation relative d'au moins un module de couplage (7a - 7d ; 8a - 8d) autour de son axe d'articulation ou de rotation (M1, M2, M3, M4).

6. Transmission à réglage continu selon l'une des revendications précédentes, **caractérisée en ce que** respectivement un module de couplage (7a - 7d) couplé au premier élément de guidage interne (5, 5') de chaque mécanisme de couplage traverse excentriquement par rapport à son axe de rotation (AA) au moins un segment en forme de disque de cet élément de guidage (5, 5'), où de préférence respectivement un module de couplage (7a - 7d) couplé au premier élément de guidage interne (5, 5') de chaque mécanisme de couplage est conçu comme module de transmission (7a - 7d) qui est monté à rotation libre autour d'un propre axe de rotation (M1, M2, M3, M4) dans au moins un segment en forme de disque de cet élément de guidage (5, 5') excentriquement par rapport à son axe de rotation (AA).

7. Transmission à réglage continu selon l'une des revendications précédentes, **caractérisée en ce qu'**un module de couplage (8a - 8d) couplé au deuxième élément de guidage (11, 12, 14) présente la forme d'un levier, où de préférence respectivement un module de couplage (8a - 8d) de chaque mécanisme de couplage est réalisé sous forme de levier (8a - 8d), où les leviers (8a - 8d) de chaque mécanisme de couplage sont montés à rotation libre indépendamment les uns des autres autour de l'axe de rotation d'une surface de guidage à symétrie de révolution du premier élément de guidage (11, 12, 14).

8. Transmission à réglage continu selon l'une des revendications précédentes, **caractérisée en ce qu'**au niveau de chaque module de couplage (7a - 7d), en particulier module de transmission (7a - 7d), couplé au premier élément de guidage interne (5, 5'; 35), excentriquement par rapport à son axe de rotation (M1, M2, M3, M4) une surface est prévue pour le couplage à respectivement l'autre module de couplage (8a - 8d), en particulier au levier (8a - 8d), qui est parallèle à l'axe de rotation (M1, M2, M3, M4).

9. Transmission à réglage continu selon l'une des revendications précédentes, **caractérisée en ce que** la surface d'un module de couplage (7a - 7d ; 8a - 8d) pour le couplage à respectivement l'autre module de couplage (7a - 7d ; 8a - 8d) est réalisée sous forme de rangée dentée ou de surface de friction.

10. Transmission à réglage continu selon l'une des revendications précédentes, **caractérisée en ce qu'**un module de couplage (7a - 7d ; 8a - 8d) est réalisé sous forme de chaîne, en particulier sous forme de chaîne à maillons.

11. Transmission à réglage continu selon la revendication 9 ou 10, **caractérisée en ce qu'**un module de couplage (7a - 7d) est conçu pour l'engrènement dans la rangée dentée du module de couplage (8a - 8d) respectivement attribué, de préférence un module de couplage (7a - 7d) étant conçu sous forme de roue dentée pour l'engrènement dans la rangée dentée du module de couplage (8a - 8d) respectivement attribué.

12. Transmission à réglage continu selon l'une des revendications précédentes, **caractérisée en ce que** respectivement une roue libre est disposée au niveau de chacun des modules de couplage (7a -7d ; 8a - 8d) de chaque mécanisme de couplage, où les mouvements de rotation des modules de couplage (7a - 7d ; 8a -8d) de tous les mécanismes de couplage couplés à un élément de guidage commun (11, 12, 14; 5, 5' ; 35) au-delà des roues libres raccordées (16a - 16d) sont regroupés, et où toutes les roues libres (16a - 16d) sont orientées de telle façon que c'est toujours le mouvement de rotation le plus rapide qui est transmis dans un sens de rotation conjointement orienté.

13. Procédé pour le fonctionnement d'une transmission à réglage continu (1 ; 31) avec au moins un premier élément de rotation, en particulier un arbre d'entraînement (2 ; 32), une bague ou un cylindre d'entraînement, un châssis (4 ; 34) ou un carter et avec au moins un deuxième élément de rotation, en particulier un arbre de sortie (3 ; 33), une bague ou un cylindre de sortie, où
a) le premier élément de rotation (2 ; 32) ou le châssis (4 ; 34) ou le carter est couplé directement ou indirectement à un premier module de guidage ou d'entraînement (5, 5' ; 35);
b) un deuxième module de guidage, en particulier un levier de guidage (14) ou un élément de palier est prévu;
c) les deux modules de guidage ou d'entraînement (5, 5', 14) sont reliés à un châssis (4 ; 34) ou un carter de la transmission (1 ; 31) ou d'un élément de machine ou d'installation raccordé, en particulier y sont montés à rotation libre ou à pivotement ou guidés ou fixés de façon telle que le deuxième module de guidage (14) est réglable par rapport au premier module de guidage ou d'entraînement (5, 5' ; 35);
d) les deux modules de guidage ou d'entraînement (5, 5', 14 ; 35) sont couplés entre eux par l'intermédiaire d'au moins deux mécanismes comprenant respectivement un premier module de couplage (7a - 7d) et un deuxième module de couplage (8a - 8d), lesquels sont montés l'un contre l'autre (9a - 9d) ou guidés et/ou s'engrènent;
e) et où respectivement un premier module de couplage (7a - 7d) de chaque mécanisme de couplage est couplé au premier module de guidage ou d'entraînement (5, 5' ; 35), pivotant respectivement autour d'un de plusieurs axes de rotation (M1, M2, M3, M4) parallèles mais excentriques par rapport à sa droite de rotation ou fixé respectivement à un de plusieurs points de fixation excentriques par rapport à sa droite de rotation;
f) tandis que respectivement l'autre module de couplage (8a - 8d) de chaque mécanisme de couplage est couplé au deuxième module ou levier de guidage (14), indépendamment des modules de couplage concernés (8a - 8d) des autres mécanismes de couplage montés à rotation libre autour d'un axe commun (11) à tous les modules de couplage (8a - 8d) raccordés, l'axe commun (11) ne tournant pas excentriquement durant le fonctionnement;
g) et où un premier et/ou deuxième module de couplage (7a - 7d ; 8a - 8d) de chaque mécanisme de couplage est monté sur un axe de rotation ou de révolution (M1, M2, M3, M4 ; 11) dont la distance au point ou à la zone de rotation ou de contact ou d'engrènement avec l'autre module de couplage attribué (7a - 7d ; 8a - 8d) présente un rayon prédéfini (d1 - d4);
h) où par ailleurs respectivement un premier ou deuxième module de couplage (7a - 7d ; 8a - 8d) de chaque mécanisme de couplage est relié directement ou couplé indirectement à au moins un premier raccordement tournant d'une roue libre (16a - 16d) dont respectivement l'autre raccordement tournant est couplé directement ou indirectement à un deuxième élément de rotation (18) tel qu'un mouvement de transport de l'angle de déviation (ù) du mouvement de rotation du premier ou deuxième module de couplage (7a - 7d, 8a - 8d) concerné est transmis cycliquement à un autre élément de rotation (18), les axes de rotation des raccordements tournants d'une roue libre (16a - 16d) étant alignés les uns avec les autres;
i) et où finalement l'autre élément de rotation (18) ainsi que le premier et le deuxième élément de rotation (2, 3 ; 32, 33) sont couplés respectivement à différents raccordements (19, 23, 25) d'un module de différentiel (20);
**caractérisé en ce que** la variation de la distance entre l'axe de rotation (M1, M2, M3, M4) au niveau du premier élément de guidage (5, 5' ; 35) et le point d'articulation au niveau du deuxième élément de guidage (11, 12, 14) engendre durant une rotation complète des éléments de guidage (11, 12, 14 ; 5, 5' ; 35) les uns autour des autres ou autour de l'axe de rotation excentrique une rotation relative d'au moins un module de couplage (7a - 7d ; 8a - 8d), en particulier un module de transmission (7a - 7d), autour de son axe d'articulation ou de rotation (M1, M2, M3, M4).

14. Procédé selon la revendication 13, **caractérisé en ce que** pour la variation du rapport de transmission un deuxième élément de guidage (11, 12, 14), en particulier le point neutre de palier (11), est dévié à partir d'une position de base, permettant ainsi de varier l'amplitude du mouvement de rotation que les modules de transmission (7a - 7d) subissent via les leviers d'entraînement (8a - 8d).

15. Procédé selon l'une des revendications 13 ou 14, **caractérisé en ce que** dans une position de base le rapport de transmission du mécanisme de transmission (1 ; 31) est égal à zéro ou un rapport de transmission préréglé est donné au moyen d'un inverseur (21).
